# EUROPEAN PATENT APPLICATION

(11) **EP 3 952 418 A1**
(43) Date of publication of application: **09.02.2022**
(21) Application number: 20785017.3
(22) Date of filing: 26.03.2020
(51) Int. Cl.: H04W 24/10, H04W 88/08, H04W 16/32, H04W 52/28

(54) **METHOD AND DEVICE FOR MEASURING CHANNEL QUALITY IN COMMUNICATION SYSTEM**

(30) Priority: 01.04.2019 KR 20190038016; 10.06.2019 KR 20190068163; 20.03.2020 KR 20200034325
(71) Applicant: Electronics and Telecommunications Research Institute, Daejeon 34129 (KR)
(72) Inventor: KIM, Jae Heung, Daejeon 34048 (KR)
(74) Representative: Betten & Resch
(86) International application number: PCT/KR2020/004118
(87) International publication number: WO 2020/204463

(57) **Abstract**

A method and device for measuring channel quality in a communication system are disclosed. An operation method of a terminal comprises the steps of: receiving, from a serving base station, first configuration information for a basic measurement operation; receiving, from the serving base station, second configuration information for a relaxed measurement operation; measuring channel quality for the serving base station by performing the basic measurement operation by using the first configuration information; and, when the condition for the relaxed measurement operation is satisfied, measuring the channel quality for the serving base station by performing the relaxed measurement operation by using the second configuration information.

## Description

### [Technical Field]

The present invention relates to techniques of channel quality measurement in a communication system, and more particularly, to techniques of channel quality measurement for supporting mobility of a terminal, and reducing power consumption of the terminal.

### [Background Art]

With the development of information and communication technology, various wireless communication technologies have been developed. Typical wireless communication technologies include long term evolution (LTE) and new radio (NR), which are defined in the 3^{rd} generation partnership project (3GPP) standards. The LTE may be one of 4^{th} generation (4G) wireless communication technologies, and the NR may be one of 5^{th} generation (5G) wireless communication technologies.

The communication system (hereinafter, a new radio (NR) communication system) using a higher frequency band (e.g., a frequency band of 6GHz or above) than a frequency band (e.g., a frequency band of 6GHz or below) of the long term evolution (LTE) (or, LTE-A) is being considered for processing of soaring wireless data. The 5G communication system can support enhanced mobile broadband (eMBB), ultra-reliable low-latency communication (URLLC), massive machine type communication (mMTC), and the like.

Meanwhile, a millimeter frequency band (e.g., a frequency band of 6 to 90 GHz) may be used to process rapidly increasing data. A small base station may be used to overcome deterioration of received signal performance due to path attenuation and reflection of radio waves in a high frequency band (e.g., millimeter frequency band). In the communication system in which a plurality of small base stations are present, channel quality measurement operations for satisfying the following requirements are required.
- Transmission of packets without loss
- Mobility function supporting 'interruption time of 0millisecond (ms)'
- Reduced power consumption of the terminal

### [Disclosure]

### [Technical Problem]

An objective of the present invention for solving the above-described problem is directed to providing a method and an apparatus for efficient channel quality measurement in a communication system.

### [Technical Solution]

An operation method of a terminal, according to a first exemplary embodiment of the present invention for achieving the above-described objective, may comprise receiving first configuration information for a normal measurement operation from a serving base station; receiving second configuration information for a relaxed measurement operation from the serving base station; measuring a channel quality for the serving base station by performing the normal measurement operation using the first configuration information; and when a condition for the relaxed measurement operation is satisfied, measuring a channel quality for the serving base station by performing the relaxed measurement operation using the second configuration information, wherein the first configuration information is configured differently from the second configuration information, and power consumption of the terminal according to the relaxed measurement operation is lower than power consumption of the terminal according to the normal measurement operation.

Each of the first configuration information and the second configuration information may be configured for each operation state of the terminal, and the operation state may include the RRC connected state, an RRC inactive state, and an RRC idle state.

Each of the first configuration information and the second configuration information may include periodicity information and measurement object information, a periodicity of the normal measurement operation may be shorter than a periodicity of the relaxed measurement operation, and measurement objects of the normal measurement operation may be more than measurement objects of the relaxed measurement operation.

When a speed of the terminal satisfies a preconfigured criterion, the relaxed measurement operation may be performed instead of the normal measurement operation.

When a position of the terminal satisfies a preconfigured criterion, the relaxed measurement operation may be performed instead of the normal measurement operation.

When a change in the channel quality measured by the normal measurement operation satisfies a preconfigured criterion, the relaxed measurement operation may be performed instead of the normal measurement operation.

The measuring of the channel quality by performing the relaxed measurement operation may comprise transmitting a first message to the serving base station, the first message requesting switching from the normal measurement operation to the relaxed measurement operation; receiving a second message from the serving base station, the second message allowing the switching from the normal measurement operation to the relaxed measurement operation; and when the switching from the normal measurement operation to the relaxed measurement operation is allowed, performing the relaxed measurement operation.

The channel quality may include a channel quality between the serving base station and the terminal and channel qualities between the terminal and one or more neighbor base stations.

The operation method may further comprise when a condition for the normal measurement operation is satisfied, switching the relaxed measurement operation to the normal measurement operation without approvement of the serving base station.

An operation method of a base station, according to a second exemplary embodiment of the present invention for achieving the above-described objective, may comprise transmitting a first message to a terminal operating in a radio resource control (RRC) connected state, the first message including first configuration information for a normal measurement operation and second configuration information for a relaxed measurement operation; receiving a second message from the terminal operating in the RRC connected state, the second message requesting switching from the normal measurement operation to the relaxed measurement operation; and transmitting a third message to the terminal operating in the RRC connected state, the third message allowing the switching from the normal measurement operation to the relaxed measurement operation, wherein the first configuration information is configured differently from the second configuration information, and power consumption of the terminal according to the relaxed measurement operation is lower than power consumption of the terminal according to the normal measurement operation.

Each of the first configuration information and the second configuration information may be configured for each operation state of the terminal, and the operation state may include the RRC connected state, an RRC inactive state, and an RRC idle state.

When a speed of the terminal satisfies a preconfigured criterion, switching from the normal measurement operation to the relaxed measurement operation may be requested.

When a position of the terminal satisfies a preconfigured criterion, switching from the normal measurement operation to the relaxed measurement operation may be requested.

When a change in the channel quality measured by the normal measurement operation satisfies a preconfigured criterion, switching from the normal measurement operation to the relaxed measurement operation may be requested.

A terminal, according to a third exemplary embodiment of the present invention for achieving the above-described objective, may comprise a processor; a memory electronically communicating the processor; and at least one instruction stored in the memory, wherein when executed by the processor, the at least one instruction causes the terminal to: receive first configuration information for a normal measurement operation from a serving base station; receive second configuration information for a relaxed measurement operation from the serving base station; measure a channel quality for the serving base station by performing the normal measurement operation using the first configuration information; and when a condition for the relaxed measurement operation is satisfied, measure a channel quality for the serving base station by performing the relaxed measurement operation using the second configuration information, wherein the first configuration information is configured differently from the second configuration information, and power consumption of the terminal according to the relaxed measurement operation is lower than power consumption of the terminal according to the normal measurement operation.

When a speed of the terminal satisfies a preconfigured criterion, the relaxed measurement operation may be performed instead of the normal measurement operation.

When a position of the terminal satisfies a preconfigured criterion, the relaxed measurement operation may be performed instead of the normal measurement operation.

When a change in the channel quality measured by the normal measurement operation satisfies a preconfigured criterion, the relaxed measurement operation may be performed instead of the normal measurement operation.

In the measuring of the channel quality by performing the relaxed measurement operation, the at least one instruction may further cause the terminal to: transmit a first message to the serving base station, the first message requesting switching from the normal measurement operation to the relaxed measurement operation; receive a second message from the serving base station, the second message allowing the switching from the normal measurement operation to the relaxed measurement operation; and when the switching from the normal measurement operation to the relaxed measurement operation is allowed, perform the relaxed measurement operation.

The at least one instruction may further cause the terminal to, when a condition for the normal measurement operation is satisfied, switch the relaxed measurement operation to the normal measurement operation without approvement of the serving base station.

### [Advantageous Effects]

According to the present invention, the measurement operation of the radio link between the base station and the terminal may be classified into the normal measurement operation and the relaxed measurement operation. The power consumption of the terminal according to the relaxed measurement operation may be smaller than the power consumption of the terminal according to the normal measurement operation. The terminal may perform the normal measurement operation, and may perform the relaxed measurement operation when relaxed measurement condition(s) are satisfied. That is, the normal measurement operation may be switched to the relaxed measurement operation. In addition, the terminal may perform the relaxed measurement operation, and may perform the normal measurement operation when normal measurement condition(s) are satisfied. That is, the relaxed measurement operation may be switched to the normal measurement operation. Therefore, the power consumption of the terminal performing the measurement operation can be reduced, and the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a second exemplary embodiment of a communication system.
FIG. 4 is a conceptual diagram illustrating a first exemplary embodiment of an integrated communication system.
FIG. 5 is a conceptual diagram illustrating a second exemplary embodiment of an integrated communication system.
FIG. 6 is a conceptual diagram illustrating a first exemplary embodiment of a method for configuring bandwidth parts (BWPs) in a communication system.
FIG. 7 is a conceptual diagram illustrating a first exemplary embodiment of operation states of a terminal in a communication system.
FIG. 8 is a sequence chart illustrating a first exemplary embodiment of a method for switching between a normal measurement operation and a relaxed measurement operation in a communication system.

### [Modes of the Invention]

While the present invention is susceptible to various modifications and alternative forms, specific embodiments are shown by way of example in the drawings and described in detail. It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, exemplary embodiments of the present invention will be described in greater detail with reference to the accompanying drawings. To facilitate overall understanding of the present invention, like numbers refer to like elements throughout the description of the drawings, and description of the same component will not be reiterated.

A communication system to which exemplary embodiments according to the present invention will be described. However, the communication system to which exemplary embodiments according to the present invention are applied is not restricted to what will be described below. That is, the exemplary embodiments according to the present invention may be applied to various communication systems. Here, the term 'communication system' may be used with the same meaning as the term 'communication network'.

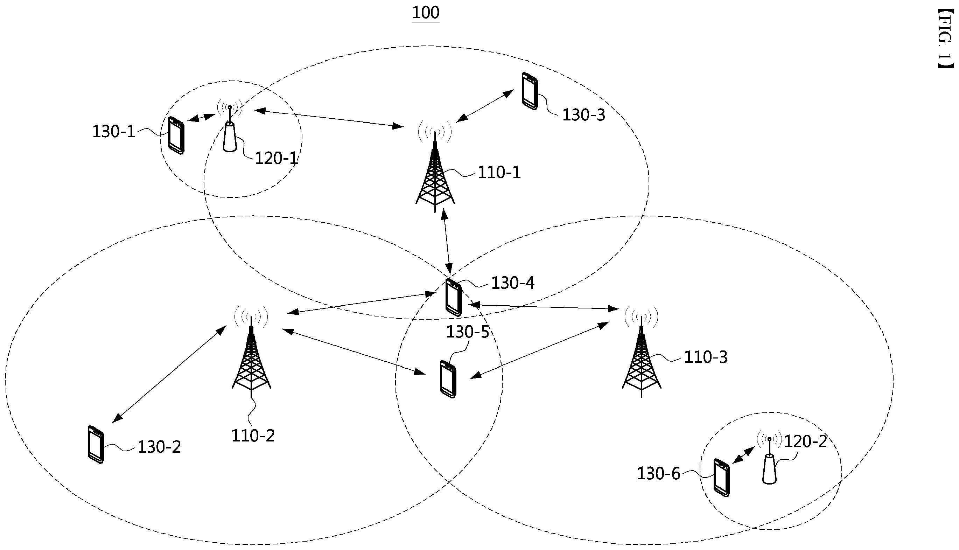

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4th generation (4G) communication (e.g., long term evolution (LTE), LTE-advanced (LTE-A)), 5th generation (5G) communication (e.g., new radio (NR)), or the like. The 4G communication may be performed in a frequency band of 6 gigahertz (GHz) or below, and the 5G communication may be performed in a frequency band of 6 GHz or above.

For example, for the 4G and 5G communications, the plurality of communication nodes may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like.

Also, the communication system 100 may further include a core network. When the communication system 100 supports the 4G communication, the core network may comprise a serving gateway (S-GW), a packet data network (PDN) gateway (P-GW), a mobility management entity (MME), and the like. When the communication system 100 supports the 5G communication, the core network may comprise a user plane function (UPF), a session management function (SMF), an access and mobility management function (AMF), and the like.

Meanwhile, each of the plurality of communication nodes 110-1, 110-2, 110-3, 120-1, 120-2, 130-1, 130-2, 130-3, 130- 4, 130-5, and 130-6 constituting the communication system 100 may have the following structure.

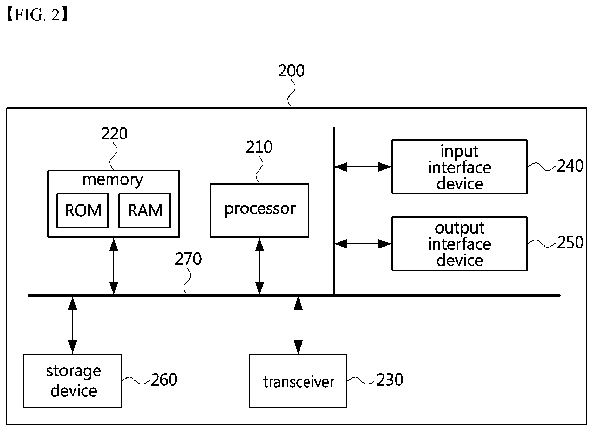

FIG. 2 is a block diagram illustrating a first embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, a evolved Node-B (eNB), a base transceiver station (BTS), a radio base station, a radio transceiver, an access point, an access node, a road side unit (RSU), a radio remote head (RRH), a transmission point (TP), a transmission and reception point (TRP), an eNB, a gNB, or the like.

Each of the plurality of terminals 130-1, 130-2, 130-3, 130-4, 130-5, and 130-6 may refer to a user equipment (UE), a terminal, an access terminal, a mobile terminal, a station, a subscriber station, a mobile station, a portable subscriber station, a node, a device, an Internet of things (IoT) device, a mounted apparatus (e.g., a mounted module/device/terminal or an on-board device/terminal, etc.), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

Also, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, methods for configuring and managing radio interfaces in a communication system will be described. Even when a method (e.g., transmission or reception of a data packet) performed at a first communication node among communication nodes is described, the corresponding second communication node may perform a method (e.g., reception or transmission of the data packet) corresponding to the method performed at the first communication node. That is, when an operation of a terminal is described, the corresponding base station may perform an operation corresponding to the operation of the terminal. Conversely, when an operation of the base station is described, the corresponding terminal may perform an operation corresponding to the operation of the base station.

Meanwhile, in a communication system, a base station may perform all functions (e.g., remote radio transmission and reception function, baseband processing function, and the like) of a communication protocol. Alternatively, the remote radio transmission and reception function among all the functions of the communication protocol may be performed by a transmission reception point (TRP) (e.g., flexible TRP (f-TRP)), and the baseband processing function among all the functions of the communication protocol may be performed by a baseband unit (BBU) block. The TRP may be a remote radio head (RRH), a radio unit (RU), a transmission point (TP), or the like. The BBU block may include at least one BBU or at least one digital unit (DU). The BBU block may be referred to as a 'BBU pool', a 'centralized BBU', or the like. The TRP may be connected to the BBU block via a wired fronthaul link or a wireless fronthaul link. A communication system composed of a backhaul link and a fronthaul link may be as follows. When a functional-split technique of the communication protocol is applied, the TRP may selectively perform some functions of the BBU or some functions of a medium access control (MAC) or a radio link control (RLC).

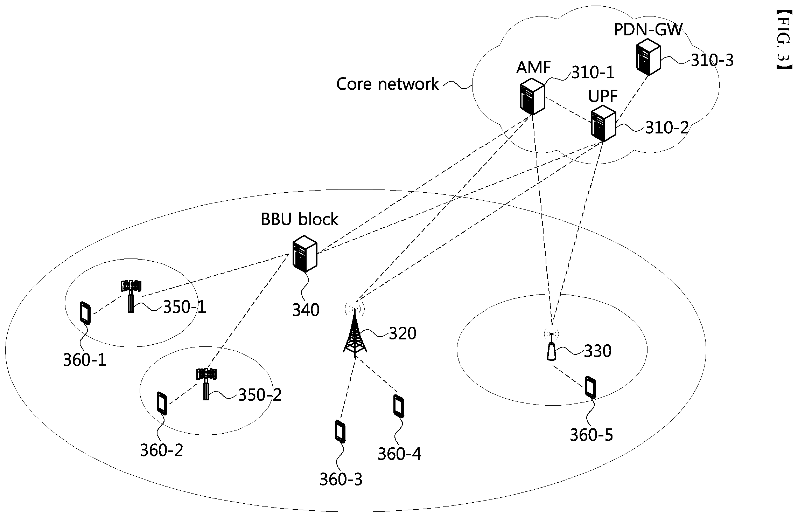

FIG. 3 is a conceptual diagram illustrating a second exemplary embodiment of a communication system.

Referring to FIG. 3, a communication system may include a core network and an access network. The core network supporting the 4G communication may include an MME 310-1, an S-GW 310-2, a P-GW 310-3, and the like. The core network supporting the 5G communication may include an AMF 310-1, an UPF 310-2, a PDN-GW 310-3, and the like. The access network may include a macro base station 320, a small base station 330, TRPs 350-1 and 350-2, terminals 360-1, 360-2, 360-3, 360-4, and 360-5, and the like. The macro base station 320 or the small base station 330 may be connected to a termination node of the core network via a wired backhaul. The TRPs 350-1 and 350-2 may support the remote radio transmission and reception function among all the functions of the communication protocol, and the baseband processing function for the TRPs 350-1 and 350-2 may be performed by the BBU block 340. The BBU block 340 may belong to the access network or the core network. The communication nodes (e.g., MME, S-GW, P-GW, AMF, UPF, PDN-GW, macro base station, small base station, TRPs, terminals, and BBU block) belonging to the communication system may be configured identically or similarly to the communication node 200 shown in FIG. 2.

The macro base station 320 may be connected to the core network (e.g., AMF 310-1, UPF 310-2, MME, S-GW) using a wired backhaul link or a wireless backhaul link, and may provide communication services to the terminals 360-3 and 360-4 based on a communication protocol (e.g., 4G communication protocol, 5G communication protocol). The small base station 330 may be connected to the core network (e.g., AMF 310-1, UPF 310-2, MME, S-GW) using a wired backhaul link or a wireless backhaul link, and may provide communication services to the terminal 360-5 based on a communication protocol (e.g., 4G communication protocol, 5G communication protocol).

The BBU block 340 may be located in the AMF 310-1, the UPF 310-2, the MME, the S-GW, or the macro base station 320. Alternatively, the BBU block 340 may be located independently of each the AMF 310-1, the UPF 310-2, the MME, the S-GW, and the macro base station 320. For example, the BBU block 340 may be configured as a logical function between the macro base station 320 and the AMF 310-1 (or UPF 310-2). The BBU block 340 may support the plurality of TRPs 350-1 and 350-2, and may be connected to each of the plurality of TRPs 350-1 and 350-2 using a wired fronthaul link or a wireless fronthaul link. That is, the link between the BBU block 340 and the TRPs 350-1 and 350-2 may be referred to as a 'fronthaul link'.

The first TRP 350-1 may be connected to the BBU block 340 via a wired fronthaul link or a wireless fronthaul link, and provide communication services to the first terminal 360-1 based on a communication protocol (e.g., 4G communication protocol, 5G communication protocol). The second TRP 350-2 may be connected to the BBU block 340 via a wired fronthaul link or a wireless fronthaul link, and provide communication services to the second terminal 360-2 based on a communication protocol (e.g., 4G communication protocol, 5G communication protocol).

In the exemplary embodiments to be described below, a communication system including an access network, an Xhaul network, and a core network may be referred to as an 'integrated communication system'. The communication nodes (e.g., MME, S-GW, P-GW, AMF, UPF, BBU block, distributed unit (DU), central unit (CU), base station, TRP, terminal, and the like) may be configured identically or similarly to the communication node 200 shown in FIG. 2. The communication nodes belonging to the Xhaul network may be connected using Xhaul links, and the Xhaul link may be a backhaul link or a fronthaul link.

Also, the UPF (or, S-GW) of the integrated communication system may refer to a termination communication node of the core network that exchanges packets (e.g., control information, data) with the base station, and the AMF (or, MME) of the integrated communication system may refer to a communication node in the core network, which performs control functions in a radio access section (or, interface) of the terminal. Here, each of the backhaul link, the fronthaul link, the Xhaul link, the DU, the CU, the BBU block, the S-GW, the MME, the AMF, and the UPF may be referred to as a different term according to a function (e.g., function of the Xhaul network, function of the core network) of a communication protocol depending on a radio access technology (RAT).

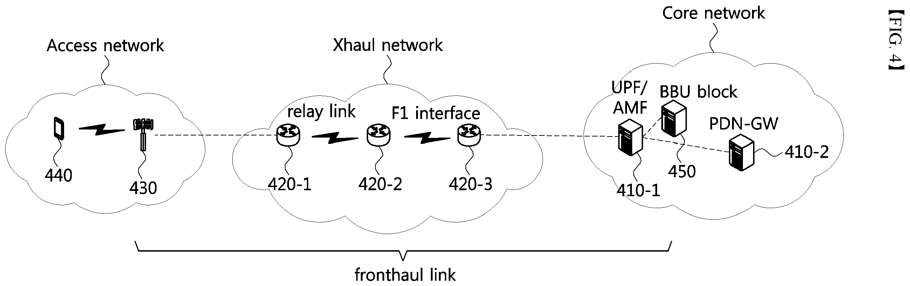

FIG. 4 is a conceptual diagram illustrating a first exemplary embodiment of an integrated communication system.

Referring to FIG. 4, the integrated communication system may include an access network, an Xhaul network, and a core network. The Xhaul network may be located between the access network and the core network, and may support communications between the access network and the core network. The communication nodes belonging to the integrated communication system may be configured to be the same as or similar to the communication node 200 shown in FIG. 2. The access network may include a TRP 430, a terminal 440, and the like. The Xhaul network may include a plurality of communication nodes 420-1, 420-2, and 420-3. The communication node constituting the Xhaul network may be referred to as a 'DU' or 'CU'. In the Xhaul network, the DUs 420-1 and 420-2 and the CU 420-3 may be connected using wireless Xhaul links, and may be connected based on a multi-hop scheme. The core network may include an UPF/AMF 410-1 (or, S-GW/MME), a PDN-GW 410-2, and the like. The UPF/AMF 410-1 may refer to a communication node including an UPF and an AMF, and the S-GW/MME may refer to a communication node including an S-GW and an MME. The BBU block 450 may be located in the UPF/AMF 410-1 and may be connected to the CU 420-3 via a wired link.

The first DU 420-1 of the Xhaul network may be connected to the TRP 430 using a wired link. Alternatively, the first DU 420-1 may be integrated into the TRP 430. The second DU 420-2 may be connected to each of the first DU 420-1 and the CU 420-3 using a wireless link (e.g., wireless Xhaul link), and the CU 420-3 may be connected to the termination communication node (e.g.., the UPF/AMF 410-1) of the core network using a wired link. In the Xhaul network, the CU 420-3 connected to the termination communication node of the core network may be referred to as an 'aggregator'. The functions of the aggregator may be performed by the UPF/AMF 410-1.

The communications between the DUs 420-1 and 420-2 and the CU 420-3 may be performed using a communication protocol for the Xhaul link (hereinafter, 'Xhaul protocol'), which is different from an access protocol (e.g., a communication protocol used for communications between the terminal 440 and the TRP 430 (or, macro base station, small base station)). The packets to which the Xhaul protocol is applied may be transmitted to each of the core network and the access network through the Xhaul link. Here, the packets may be control information, data, and the like.

The TRP 430 may provide communication services to the terminal 440 using an access protocol (e.g., 4G communication protocol, 5G communication protocol), and may be connected to the first DU 420-1 using a wired link. The TRP 430 may support a remote radio transmission and reception function among all the functions of the communication protocol, and the baseband processing function for the TRP 430 may be performed by the BBU block 450. A link (e.g., 'TRP 430 - first DU 420-1 - second DU 420-2 - CU 420-3 - BBU block 450 (or, UPF/AMF 410-1)') between the TRP 430 performing the remote radio transmission and reception function and the BBU block 450 performing the baseband processing function may be referred to as a 'fronthaul link'. For example, the fronthaul link may be configured differently depending on the location of the BBU block 450 performing the baseband processing function.

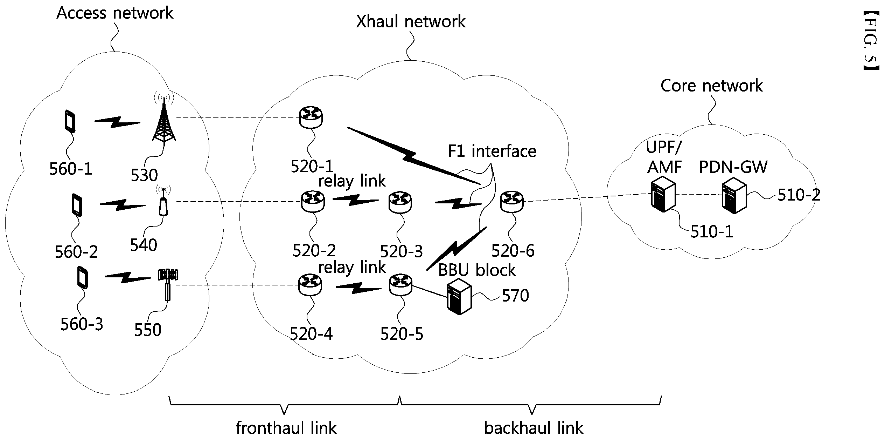

FIG. 5 is a conceptual diagram illustrating a second exemplary embodiment of an integrated communication system.

Referring to FIG. 5, an integrated communication system may include an access network, an Xhaul network, and a core network. The Xhaul network may be located between the access network and the core network, and may support communications between the access network and the core network. The communication nodes belonging to the integrated communication system may be configured to be the same as or similar to the communication node 200 shown in FIG. 2. The access network may include a macro base station 530, a small base station 540, a TRP 550, terminals 560-1, 560-2, and 560-3, and the like. The Xhaul network may include a plurality of communication nodes 520-1, 520-2, 520-3, 520-4, 520-5, and 520-6. The communication node constituting the Xhaul network may be referred to as a 'DU' or 'CU'. In the Xhaul network, the DUs 520-1, 520-2, 520-3, 520-4, and 520-5, and the CU 520-6 may be connected using wireless Xhaul links and may be connected based on a multi-hop scheme. A BBU block 570 may be located in one of the plurality of CU/DUs 520-1, 520-2, 520-3, 520-4, 520-5, and 520-6. For example, the BBU block 570 may be located in the fifth DU 520-5. The core network may include an UPF.AMF 510-1 (or, S-GW/MME), a PDN-GW 510-2, and the like. The UPF/AMF 510-1 may refer to a communication node including an UPF and an AMF, and the S-GW/MME may refer to a communication node including an S-GW and an MME

The first DU 520-1 of the Xhaul network may be connected to the macro base station 530 using a wired link, or may be integrated into the macro base station 530. The second DU 520-2 of the Xhaul network may be connected to the small base station 540 using a wired link, or may be integrated into the small base station 540. The fourth DU 520-4 of the Xhaul network may be connected to the TRP 550 using a wired link, or may be integrated into the TRP 550.

The CU 520-6 may be connected to a termination communication node (e.g., the UPF/AMF 510-1) of the core network using a wired link. The CU 520-6 connected to the termination communication node of the core network may be referred to as an 'aggregator'. The communications between the plurality of CU/DUs 520-1, 520-2, 520-3, 520-4, 520-5, and 520-6 may be performed using the Xhaul protocol. The packets (e.g., data, control information) to which the Xhaul protocol is applied may be transmitted to each of the core network and the access network via the Xhaul link.

The macro base station 530 may provide communication services to the first terminal 560-1 using an access protocol (e.g., 4G communication protocol, 5G communication protocol), and may be connected to the first DU 520-1 via a wired link. The macro base station 530 may be connected to the core network via the Xhaul network, and a link of 'macro base station 530 - first DU 520-1 - CU 520-6 - UPF/AMF 510-1' may be referred to as a 'backhaul link'. The small base station 540 may provide communication services to the second terminal 560-2 using an access protocol (e.g., 4G communication protocol, 5G communication protocol), and may be connected to the second DU 520-2 using a wired link. The small base station 540 may be connected to the core network via the Xhaul network, and a link of 'small base station 540 - second DU 520-2 - third DU 520-3 - CU 520-6 - UPF/AMF 510-1' may be referred to as a 'backhaul link'.

The TRP 550 may provide communication services to the third terminal 560-3 using an access protocol (e.g., 4G communication protocol, 5G communication protocol), and may be connected to the fourth DU 520-4 using a wired link. The TRP 550 may support a remote radio transmission and reception function among all the functions of the communication protocol, and the baseband processing function for the TRP 550 may be performed by the BBU block 570. A link (e.g., a link of 'TRP 550 - fourth DU 520-4 -BBU block 570 (or, fifth DU 520-5)') between the TRP 550 performing the remote radio transmission and reception function and the BBU block 570 performing the baseband processing function may be referred to as a 'fronthaul link', and a link (e.g., a link of 'BBU block 570 (or, fifth DU 520-5) - CU 520-6 - UPF/AMF 510-1') between the BBU block 570 and the UPF/AMF 510-1 may be referred to as a 'backhaul link'. For example, the fronthaul link may be configured differently depending on the location of the BBU block 570 performing the baseband processing function.

Meanwhile, referring to FIGS. 4 and 5, when the functional split technique is applied, the CUs 420-3 and 520-6 and the DUs 420-1, 420-2, 520-1, 520-2, 520-3, 520-4, and 520-5 may perform different functions. The CUs 420-3 and 520-6 may be gNB-CUs of the NR communication system, and the DUs 420-1, 420-2, 520-1, 520-2, 520-3, 520-4, and 520-5 may be gNB-DUs of the NR communication system. The CUs 420-3 and 520-6 may control operations of one or more of the DUs 420-1, 420-2, 520-1, 520-2, 520-3, 520-4, and 520-5, and may be logical nodes performing radio resource control (RRC) functions, service data adaptation protocol (SDAP) functions, and/or packet data convergence protocol (PDCP) functions. The DUs 420-1, 420-2, 520-1, 520-2, 520-3, 520-4, and 520-5 may be logical nodes performing radio link control (RLC) functions, medium access control (MAC) functions, and/or physical (PHY) functions (e.g., some PHY functions).

One DU 420-1, 420-2, 520-1, 520-2, 520-3, 520-4, or 520-5 may support one or more cells, and one cell may support one DU 420-1, 420-2, 520-1, 520-2, 520-3, 520-4, or 520-5. The operations (e.g., some operations) of the DUs 420-1, 420-2, 520-1, 520-2, 520-3, 520-4, and 520-5 may be controlled by the CUs 420-3 and 520-6, and communications between the DUs 420-1, 420-2, 520-1, 520-2, 520-3, 520-4, and 520-5 and the CUs 420-3 and 520-6 may be performed through F1 interfaces.

Depending on the configurations, roles and/or attributes of the nodes for the functional split, the DUs 420-2, 520-3, and 520-5 for relaying may exist in communication sections between the DUs 420-1, 520-1, 520-2, and 520-4 and the CUs 420-3 and 520-6. In this case, relay links may be formed between the DUs 420-1, 520-1, 520-2, and 520-4 and the DUs 420-2, 520-3, and 520-5. The DUs 420-1 and 520-4 may be connected to the TRPs 430 and 550 wirelessly or wiredly. The DUs 520-1 and 520-2 may be configured as integrated with the base stations 530 and 540.

In a communication system supporting dual connectivity, connections may be established between a terminal and a plurality of base stations. The plurality of base stations may provide a service to the terminal. The plurality of base stations supporting a dual connectivity function (e.g., the plurality of base stations connected to the terminal) may be classified into a master base station and a secondary base station(s). In the exemplary embodiments below, the dual connectivity may mean a single-radio dual connectivity (SR-DC) by a plurality of base stations supporting the same radio access technology (RAT) or a multi-radio (MR)-DC by a plurality of base stations supporting different RATs.

The master base station may be referred to as a 'master node'. The master node may be a node that mainly performs RRC functions in order to support the dual connectivity function. The master node may provide a control plane connection function with the core network. The master node may be composed of a plurality of cells. The plurality of cells included in the master node may be referred to as a master cell group (MCG). An MCG bearer may mean a bearer according to a logical channel configuration between an RLC layer and a MAC layer of a cell belonging to the MCG.

The secondary base station may be referred to as a 'secondary node'. The secondary node may not provide a control plane connection function with the core network. The secondary node may provide a service to the terminal using additional radio resources. The secondary node may be composed of a plurality of cells. The plurality of cells included in the secondary node may be referred to as a secondary cell group (SCG). A split bearer may use a logical channel configuration between an RLC layer and a MAC layer of a cell belonging to the MCG, and a logical channel configuration between an RLC layer and a MAC layer of a cell belonging to the SCG. The split bearer may be classified into a secondary node (SN) terminated bearer and a master node (MN) terminated bearer according to a type of a node performing a PDCP function. When the PDCP function for the split bearer is performed at the master node, the split bearer may be an MN terminated bearer. When the PDCP function for the split bearer is performed at the secondary node, the split bearer may be an SN terminated bearer.

Meanwhile, in the NR communication system using a millimeter frequency band, flexibility for a channel bandwidth operation for packet transmission may be secured based on a bandwidth part (BWP) concept. The base station may configure up to 4 BWPs having different bandwidths to the terminal. The BWPs may be independently configured for downlink and uplink. That is, downlink BWPs may be distinguished from uplink BWPs. Each of the BWPs may have a different subcarrier spacing as well as a different bandwidth. For example, BWPs may be configured as follows.

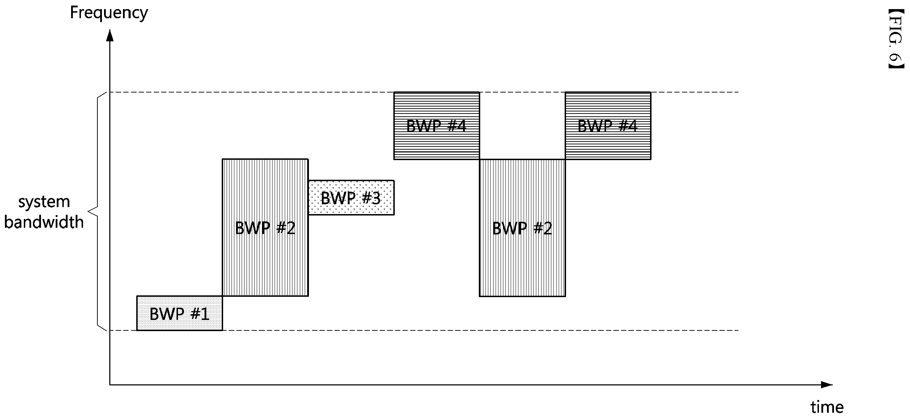

FIG. 6 is a conceptual diagram illustrating a first exemplary embodiment of a method for configuring bandwidth parts (BWPs) in a communication system.

As shown in FIG. 6, a plurality of bandwidth parts (e.g., BWPs #1 to #4) may be configured within a system bandwidth of the base station. The BWPs #1 to #4 may be configured not to be larger than the system bandwidth of the base station. The bandwidths of the BWPs #1 to #4 may be different, and different subcarrier spacings may be applied to the BWPs #1 to #4. For example, the bandwidth of the BWP #1 may be 10 MHz, and the BWP #1 may have a 15 kHz subcarrier spacing. The bandwidth of the BWP #2 may be 40 MHz, and the BWP #2 may have a 15 kHz subcarrier spacing. The bandwidth of the BWP #3 may be 10 MHz, and the BWP #3 may have a 30 kHz subcarrier spacing. The bandwidth of the BWP #4 may be 20 MHz, and the BWP #4 may have a 60 kHz subcarrier spacing.

The BWPs may be classified into an initial BWP (e.g., first BWP), an active BWP (e.g., activated BWP), and a default BWP. The terminal may perform an initial access procedure (e.g., access procedure) with the base station in the initial BWP. One or more BWPs may be configured through an RRC connection configuration message, and one BWP among the one or more BWPs may be configured as the active BWP. Each of the terminal and the base station may transmit and receive packets in the active BWP among the configured BWPs. Therefore, the terminal may perform a monitoring operation on control channels for packet transmission and reception in the active BWP.

The terminal may switch the operating BWP from the initial BWP to the active BWP or the default BWP. Alternatively, the terminal may switch the operating BWP from the active BWP to the initial BWP or the default BWP. The BWP switching operation may be performed based on an indication of the base station or a timer. The base station may transmit information indicating the BWP switching to the terminal using one or more of an RRC message, a MAC message (e.g., MAC control element (CE)), and a PHY message (e.g., DCI). The terminal may receive the information indicating the BWP switching from the base station, and may switch the operating BWP of the terminal to a BWP indicated by the received information.

When a random access (RA) resource is not configured in the active uplink (UL) BWP in the NR communication system, the terminal may switch the operating BWP of the terminal from the active UL BWP to the initial UL BWP in order to perform a random access procedure. The operating BWP may be a BWP in which the terminal performs communication (e.g., transmission and reception operation of a signal and/or channel).

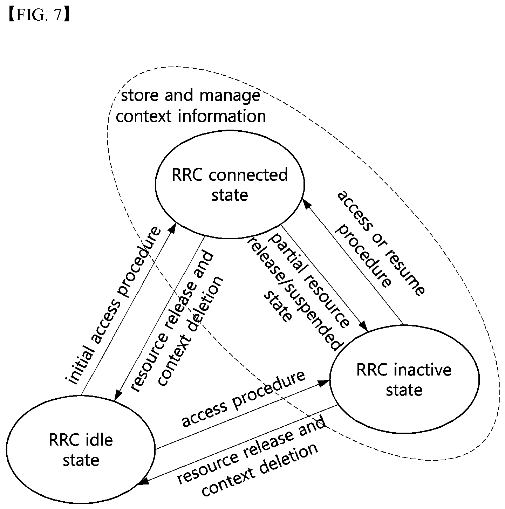

FIG. 7 is a conceptual diagram illustrating a first exemplary embodiment of operation states of a terminal in a communication system.

As shown in FIG. 7, operation states of the terminal may be classified into an RRC connected state, an RRC inactive state, and an RRC idle state. When the terminal operates in the RRC connected state or the RRC inactive state, a radio access network (RAN) (e.g., a control function block of the RAN) and the base station may store and manage RRC connection configuration information and/or context information (e.g., RRC context information, AS context information) of the corresponding terminal. In addition, the terminal operating in the RRC connected state or the RRC inactive state may store RRC connection configuration information and/or context information.

When the operation state of the terminal transitions from the RRC connected state to the RRC idle state or when the operation state of the terminal transitions from the RRC inactive state to the RRC idle state, the context information may be deleted in the RAN and the base station. The context information (e.g., RRC context information) may include an identifier assigned to the terminal, PDU session information, an encryption key, capability information, and the like.

The terminal operating in the RRC idle state may perform a cell selection operation or a cell reselection operation for camping on an optimal base station (e.g., optimal cell) by performing a monitoring operation (e.g., measurement operation) on downlink signals in an on-duration or an active time according to a discontinuous reception (DRX) cycle. In order to camp on a new base station (e.g., new cell), the terminal may acquire system information from the base station. In addition, when system information required by the terminal exists, the corresponding terminal may request transmission of the system information. The terminal may perform a reception operation of a paging message in an on-duration or active time according to a paging occasion.

The terminal operating in the RRC connected state may configure a radio bearer (e.g., data radio bearer (DRB), signaling radio bearer (SRB)) with the base station (e.g., serving cell), and may store and manage context information (e.g., RRC context information) required in the RRC connected state. The terminal operating in the RRC connected state may perform a PDCCH monitoring operation by using the context information and the connection configuration information. The terminal may receive downlink data from the base station through radio resources indicated by DCI obtained by the PDCCH monitoring operation. In addition, the terminal may transmit uplink data to the base station using radio resources indicated by DCI obtained by the PDCCH monitoring operation.

The mobility function for the terminal operating in the RRC connected state may be supported through a handover procedure when the base station is changed. For the handover procedure, the terminal may perform a measurement operation on the base station and/or neighbor base station(s) (e.g., neighbor cell(s)) based on measurement and/or reporting parameters configured by the base station, and report the measurement results to the base station. In the exemplary embodiments below, the measurement operation may include an operation for reporting the measurement result. Also, the terminal operating in the RRC connected state may perform a DRX operation based on DRX parameters configured by the base station. For example, the terminal operating in the RRC connected state may perform the PDCCH monitoring operation in an on-duration or active time according to a DRX cycle.

The terminal operating in the RRC inactive state may store and manage context information required for the RRC inactive state. The terminal operating in the RRC inactive state may perform a DRX operation based on DRX parameters configured by the last base station (e.g., serving cell). For example, the terminal operating in the RRC inactive state may perform a monitoring operation or a measurement operation on downlink signals in an on-duration or active time according to a DRX cycle, and may perform a cell selection operation or a cell reselection operation based on the result of the monitoring operation or the measurement operation to camp on an optimal base station (e.g., optimal cell). The terminal may acquire system information for camping on a new base station (e.g., new cell), and may request transmission of system information (e.g., system information required by the terminal) when necessary. The terminal operating in the RRC inactive state may perform a reception operation of a paging message in an on-duration or active time according to a paging occasion.

A communication procedure between the base station and the terminal may be performed based on a beamforming scheme. In order to provide a mobility function between base stations or to select an optimal beam within the base station, a signal transmitted from the terminal may be used. Connections between the terminal and one or more base stations (e.g., one or more cells) may be configured, and one or more base stations may provide a service to the terminal. The configured connections between the terminal and one or more base stations may be maintained. For example, the one or more base stations may store and manage context information (e.g., AS context information). Alternatively, the terminal may be located in coverage of the base station without configuring a connection with the base station.

When a beamforming scheme is used in a high frequency band, in the communication system, a beam-level mobility function to change a configured beam of the terminal, a mobility function to change a configured beam between base stations (e.g., cells), a radio resource management function to change configuration of a link, and the like may be supported.

In order to perform the mobility support function and the radio resource management function, the base station may transmit a synchronization signal (e.g., a synchronization signal/physical broadcast channel (SS/PBCH) block) and/or a reference signal. In order to support multiple numerologies, frame formats supporting symbols having different lengths may be configured. In this case, the terminal may perform a monitoring operation of the synchronization signal and/or reference signal in a frame according to an initial numerology, a default numerology, or a default symbol length. Each of the initial numerology and the default numerology may be applied to a frame format applied to radio resources in which a UE-common search space is configured, a frame format applied to radio resources in which a control resource set (CORESET) #0 of the NR communication system is configured, and/or a frame format applied to radio resources in which a synchronization symbol burst capable of identifying a cell in the NR communication system is transmitted.

The frame format may refer to information of configuration parameters (e.g., values of the configuration parameters, offset, index, identifier, range, periodicity, interval, duration, etc.) for a subcarrier spacing, a control channel (e.g., CORESET), a symbol, a slot, and/or a reference signal. The base station may inform the frame format to the terminal using system information and/or a control message (e.g., dedicated control message).

The terminal connected to the base station may transmit a reference signal (e.g., uplink dedicated reference signal) to the base station using resources configured by the corresponding base station. For example, the uplink dedicated reference signal may include a sounding reference signal (SRS). In addition, the terminal connected to the base station may receive a reference signal (e.g., downlink dedicated reference signal) from the base station in resources configured by the corresponding base station. The downlink dedicated reference signal may be a channel state information-reference signal (CSI-RS), a phase tracking-reference signal (PT-RS), a demodulation-reference signal (DM-RS), or the like. Each of the base station and the terminal may perform a beam management operation through monitoring on a configured beam or an active beam based on the reference signal.

For example, the base station may transmit a synchronization signal and/or a reference signal so that the terminal in its service area can search for itself to perform downlink synchronization maintenance, beam configuration, or link monitoring operations. Also, the terminal connected to the base station (e.g., serving base station) may receive physical layer radio resource configuration information for connection configuration and radio resource management from the base station. The physical layer radio resource configuration information may mean configuration parameters included in RRC control messages of the LTE communication system or the NR communication system. For example, the resource configuration information may include *PhysicalConfigDedicated, PhysicalCellGroupConfig, PDCCH-Config(Common), PDSCH-Config(Common), PDCCH-ConfigSIB1, ConfigCommon, PUCCH-Config(Common), PUSCH-Config(Common), BWP-DownlinkCommon, BWP-UplinkCommon, ControlResourceSet, RACH-ConfigCommon, RACH-ConfigDedicated, RadioResourceConfigCommon, RadioResourceConfigDedicated, ServingCellConfig, ServingCellConfigCommon,* and the like.

The radio resource configuration information may include parameter values such as a configuration (or allocation) periodicity of a signal (or radio resource) according to a frame format of a base station (or transmission frequency), time resource allocation information for transmission, frequency resource allocation information for transmission, a transmission (or allocation) time, or the like. In order to support multiple numerologies, the frame format of the base station (or transmission frequency) may mean a frame format having different symbol lengths according to a plurality of subcarrier spacings within one radio frame. For example, the number of symbols constituting each of a mini-slot, a slot, and a subframe that exist within one radio frame (e.g., a frame of 10 ms) may be configured differently.
- Configuration information of transmission frequency and frame format of base station
   ▪ Transmission frequency information: information on all transmission carriers (i.e., cell-specific transmission frequency) in the base station, information on BWPs in the base station, information on a transmission time reference or time difference between transmission frequencies in the base station (e.g., transmission periodicity or offset parameter indicating the transmission reference time (or time difference) of the synchronization signal), etc.
   ▪ Frame format information: configuration parameters of a mini-slot, slot, subframe that supports a plurality of symbol lengths according to SCS
- Configuration information of downlink reference signal (e.g., channel state information-reference signal (CSI-RS), common reference signal (Common-RS), etc.)
   ▪ Configuration parameters such as a transmission periodicity, a transmission position, a code sequence, or a masking (or scrambling) sequence for a reference signal commonly applied in the coverage of the base station (or beam).
- Configuration information of uplink control signal
   ▪ Configuration parameters such as a sounding reference signal (SRS), uplink beam sweeping (or beam monitoring) reference signal (RS), uplink grant-free radio resources, or uplink radio resources (or RA preamble) for random access, etc.
- Configuration information of physical downlink control channel (e.g., PDCCH)
   ▪ Configuration parameters such as a reference signal for PDCCH demodulation, a beam common reference signal (e.g., a reference signal that can be received by all terminals in a beam coverage), a beam sweeping (or beam monitoring) reference signal, a reference signal for channel estimation, etc.
- Configuration information of physical uplink control channel (e.g., PUCCH)
- Scheduling request signal configuration information
- Configuration information for a feedback (ACK or NACK) transmission resource for supporting HARQ functions, etc.
- Number of antenna ports, antenna array information, beam configuration or beam index mapping information for application of beamforming techniques
- Configuration information of downlink and/or uplink signals (or uplink access channel resource) for beam sweeping (or beam monitoring)
- Configuration information of parameters for beam configuration, beam recovery, beam reconfiguration, or radio link re-establishment operation, a beam change operation within the same base station, a reception signal of a beam triggering handover execution to another base station, timers controlling the above-described operations, etc.

In case of a radio frame format that supports a plurality of symbol lengths for supporting multi-numerology, the configuration (or allocation) periodicity of the parameter, the time resource allocation information, the frequency resource allocation information, the transmission time, and/or the allocation time, which constitute the above-described information, may be information configured for each corresponding symbol length (or subcarrier spacing).

In the following exemplary embodiments, 'Resource-Config information' may be a control message including one or more parameters among the radio resource configuration information of the physical layer. In addition, the 'Resource-Config information' may mean attributes and/or configuration values (or range) of information elements (or parameters) delivered by the control message. The information elements (or parameters) delivered by the control message may be radio resource configuration information applied commonly to the entire coverage of the base station (or, beam) or radio resource configuration information allocated dedicatedly to a specific terminal (or, specific terminal group).

The configuration information included in the 'Resource-Config information' may be transmitted through one control message or different control messages according to the attributes of the configuration information. The beam index information may not express the index of the transmission beam and the index of the reception beam distinctly. For example, the beam index information may be expressed using a reference signal mapped or associated with the corresponding beam index or an index (or identifier) of a transmission configuration indicator (TCI) state for beam management.

Therefore, the terminal operating in the RRC connected state may receive a communication service through a beam (e.g., beam pair) configured between the terminal and the base station (e.g., serving cell). The terminal may perform a search operation or monitoring operation of a radio channel by using the synchronization signal (e.g., SS/PBCH block) and/or reference signal (e.g., CSI-RS) transmitted from the base station (e.g., serving cell). Here, the expression that a communication service is provided through a beam (e.g., configured beam) may mean that a packet is transmitted and received through an active beam among one or more configured beams. In the NR communication system, the expression that a beam is activated may mean that a configured TCI state is activated.

The terminal may operate in the RRC idle state or the RRC inactive state. In this case, the terminal may perform a search operation (e.g., monitoring operation) of a downlink channel by using parameter(s) obtained from the system information or the common Resource-Config information. In addition, the terminal operating in the RRC idle state or the RRC inactive state may attempt to access by using an uplink channel (e.g., a random access channel or a physical layer uplink control channel). Alternatively, the terminal may transmit control information by using an uplink channel.

The terminal may recognize or detect a radio link problem by performing a radio link monitoring (RLM) operation. Here, the expression that a radio link problem is detected may mean that physical layer synchronization configuration or maintenance for a radio link has a problem. For example, the expression that a radio link problem is detected may mean that it is detected that the physical layer synchronization between the base station and the terminal is not maintained during a preconfigured time. When a radio link problem is detected, the terminal may perform a recovery operation of the radio link. When the radio link is not recovered, the terminal may declare a radio link failure (RLF) and perform a re-establishment procedure of the radio link.

The procedure for detecting a physical layer problem of a radio link, the procedure for recovering a radio link, the procedure for detecting (or declaring) a radio link failure, and the procedure for re-establishing a radio link according to the RLM operation may be performed by functions of the layer 1 (e.g., physical layer), the layer 2 (e.g., MAC layer, RLC layer, PDCP layer, etc.), and/or the layer 3 (e.g., RRC layer) of the radio protocol.

The physical layer of the terminal may monitor a radio link by receiving a downlink synchronization signal (e.g., primary synchronization signal (PSS), secondary synchronization signal (SSS), SS/PBCH block) and/or a reference signal. In this case, the reference signal may be a base station common reference signal, a beam common reference signal, or a terminal (or terminal group) specific reference signal (e.g., a dedicated reference signal allocated to a terminal (or terminal group)). Here, the common reference signal may be used for channel estimation operations of all terminals located within a corresponding base station or beam coverage (or service area). The dedicated reference signal may be used for a channel estimation operation of a specific terminal or a specific terminal group located within a base station or beam coverage.

Accordingly, when the base station or the beam (e.g., the configured beam between the base station and the terminal) is changed, the dedicated reference signal for beam management may be changed. The beam may be changed based on the configuration parameter(s) between the base station and the terminal. A procedure for changing the configured beam may be required. The expression that a beam is changed in the NR communication system may mean that an index (or identifier) of a TCI state is changed to an index of another TCI state, that a TCI state is newly configured, or that a TCI state is changed to an active state. The base station may transmit system information including configuration information of the common reference signal to the terminal. The terminal may obtain the common reference signal based on the system information. In a handover procedure, a synchronization reconfiguration procedure, or a connection reconfiguration procedure, the base station may transmit a dedicated control message including the configuration information of the common reference signal to the terminal.

In order to support the above-described mobility support function, information for identifying the base station (or, cell) may be transmitted to the terminal according to a configuration condition of the radio protocol of the base station. The information for identifying the base station may be delivered to the terminal by using a control message of the RRC layer, a control message of the MAC layer, or a physical layer control channel according to the layer(s) included in the base station. In the exemplary embodiments, the control message of the RRC layer may be referred to as an 'RRC control message' or 'RRC message', the control message of the MAC layer may be referred to as a 'MAC control message' or 'MAC message', and the physical layer control channel may be referred to as a 'PHY control channel', 'PHY control message', or 'PHY message'.

Here, the information for identifying the base station may include one or more among a base station identifier, reference signal information, reference symbol information, configured beam information, and configured TCI state information. The reference signal information (or reference symbol information) may include configuration information (e.g., radio resource, sequence, index) of a reference signal allocated to each base station, and/or configuration information (e.g., radio resource, sequence, index) of a dedicated reference signal allocated to the terminal.

Here, the radio resource information of the reference signal may include time domain resource information (e.g., frame index, subframe index, slot index, symbol index) and frequency domain resource information (e.g., a parameter indicating a relative or absolute position of subcarriers). The parameters indicating the radio resource of the reference signal may be a resource element (RE) index, a resource set index, a resource block (RB) index, a subcarrier index, or the like. The RB index may be a physical resource block (PRB) index or a common resource block (CRB) index.

In the following exemplary embodiments, the reference signal information may include transmission periodicity information, sequence information (e.g., code sequence), masking information (e.g., scrambling information), radio resource information, and/or index information of the reference signal. The reference signal identifier may mean a parameter (e.g., resource ID, resource set ID) used to identify each of a plurality of reference signal information. The reference signal information may refer to the configuration information of the reference signal.

The configured beam information may include a configured beam index (or identifier), a configured TCI state index (or identifier), configuration information of each beam (e.g., transmission power, beam width, vertical angle, horizontal angle), transmission and/or reception timing information of each beam (e.g., subframe index, slot index, mini-slot index, symbol index, offset), reference signal information corresponding to each beam, and a reference signal identifier. In the exemplary embodiments, the base station may be a base station installed in the air. For example, the base station may be installed on an unmanned aerial vehicle (e.g., drone), a manned aircraft, or a satellite.

The terminal may receive configuration information of the base station (e.g., identification information of the base station) from the base station through one or more of an RRC message, a MAC message, and a PHY message, and may identify a base station with which the terminal performs a beam monitoring operation, a radio access operation, and/or a control (or data) packet transmission and reception operation.

When a plurality of beams are configured, communications between the base station and the terminal may be performed using the plurality of beams. In this case, the number of downlink beams may be the same as the number of uplink beams. Alternatively, the number of downlink beams may be different from the number of uplink beams. For example, the number of downlink beams may be two or more, and the number of uplink beams may be one.

When a plurality of beams are configured, communications between the base station and the terminal may be performed using some beam(s) among the plurality of beams, and the remaining beam(s) may be configured as reserved beam(s) or candidate beam(s). For example, control information and data may not be transmitted through the reserved beam(s) and/or candidate beam(s). The plurality of beams may be classified into a primary beam, a secondary beam, and a reserved beam(s) (or candidate beam(s)). In the NR communication system, configuring a plurality of beams may mean that configured TCI state identifiers (IDs) are configured by classifying them into a primary TCI state, a secondary TCI state, and a reserved TCI state.

For example, the primary beam (e.g., a beam for a primary TCI state ID) may mean a beam capable of transmitting and receiving data and control information. The secondary beam (e.g., a beam for a secondary TCI state ID or a beam for a deactivated TCI state ID) may mean a beam capable of transmitting and receiving data excluding control information. The expression that control information is excluded may mean that control signaling by the physical layer, the layer 2 (e.g., MAC layer, RLC layer, PDCP layer), and/or the layer 3 (e.g., RRC layer) is restricted for the respective layers, that the control signaling is partially restricted according to functions of the physical layer, the layer 2, and/or the layer 3, or that the control signaling is restricted according to the type of the control message.

The control message (e.g., RRC message, MAC message, and PHY message) may be a control message used for a discontinuous transmission/reception operation (e.g., discontinuous reception (DRX) operation, discontinuous transmission (DTX) operation), a retransmission operation, a connection configuration/management operation, a measurement/reporting operation, a paging operation, and/or an access operation.

The reserved (or candidate) beam (e.g., a beam for a reserved TCI state ID or a beam for a deactivated TCI state ID) may not be used for transmission and reception of data and/or control information. The reserved (or candidate) beam may be a beam used for a beam monitoring operation and a beam measurement/reporting operation for beam matching (or configuration) of the base station and/or the terminal.

Therefore, the measurement result for the reserved (or candidate) beam may be reported through the primary beam or the secondary beam. The measurement/reporting operation for the reserved (or candidate) beam may be performed based on preconfigured parameter(s). Alternatively, the measurement/reporting operation for the reserved (or candidate) beam may be performed according to determination of the terminal or event conditions. The measurement/reporting operation for the reserved (or candidate) beam may be performed periodically or aperiodically.

The result of the measurement operation (e.g., beam monitoring operation) for the reserved (or candidate) beam may be reported through a physical layer control channel (e.g., PUCCH) and/or a MAC message (e.g., MAC CE, control PDU). The MAC message may be configured in form or a MAC (sub)header and/or a MAC subPDU, and a logical channel identifier (LCID) for identifying each of MAC messages may be configured. Here, the result of the beam monitoring operation may be a measurement result for one or more beams (or beam groups). For example, the result of the beam monitoring operation may be a measurement result for beams (or beam groups) according to a beam sweeping operation of the base station.

The base station may obtain the result of the beam measurement operation or the beam monitoring operation from the terminal, and may change the properties of the beam or the properties of the TCI state based on the result of the beam measurement operation or the beam monitoring operation. The beam may be classified into a primary beam, a secondary beam, a reserved (or candidate) beam, an active beam, and a deactivated beam according to its properties. The TCI state may be classified into a primary TCI state, a secondary TCI state, a reserved (or candidate) TCI state, a serving TCI state, a configured TCI state, an active TCI state, and a deactivated TCI state according to its properties. Each of the primary TCI state and the secondary TCI state may be assumed to be an active TCI state and a serving TCI state. The reserved (or candidate) TCI state may be assumed to be a deactivated TCI state or a configured TCI state.

A procedure for changing the beam (or TCI state) property may be controlled by the RRC layer and/or the MAC layer. When the procedure for changing the beam (or TCI state) property is controlled by the MAC layer, the MAC layer may inform the higher layer of information regarding a change in the beam (or TCI state) property. The information regarding the change in the beam (or TCI state) property may be transmitted to the terminal through a MAC message and/or a physical layer control channel (e.g., PDCCH). The information regarding the change in the beam (or TCI state) property may be included in downlink control information (DCI) or uplink control information (UCI). The information regarding the change in the beam (or TCI state) property may be expressed as a separate indicator or field.

The terminal may request to change the property of the TCI state based on the result of the beam measurement operation or the beam monitoring operation. The terminal may transmit control information (or feedback information) requesting to change the property of the TCI state to the base station by using one or more of a PHY message, a MAC message, and an RRC message. The control information (or feedback information, control message, control channel) requesting to change the property of the TCI state may be configured using one or more of the configured beam information described above.

The change in the property of the beam (or TCI state) may mean a change from the active beam to the deactivated beam, a change from the deactivated beam to the active beam, a change from the primary beam to the secondary beam, a change from the secondary beam to the primary beam, a change from the primary beam to the reserved (or candidate) beam, or a change from the reserved (or candidate) beam to the primary beam. The procedure for changing the property of the beam (or TCI state) may be controlled by the RRC layer and/or the MAC layer. The procedure for changing the property of the beam (or TCI state) may be performed through partial cooperation between the RRC layer and the MAC layer.

When a plurality of beams are allocated, one or more beams among the plurality of beams may be configured as beam(s) for transmitting physical layer control channels. For example, the primary beam and/or the secondary beam may be used for transmission and reception of a physical layer control channel (e.g., PHY message). Here, the physical layer control channel may be a PDCCH or a PUCCH. The physical layer control channel may be used for transmission of one or more of scheduling information (e.g., radio resource allocation information, modulation and coding scheme (MCS) information), feedback information (e.g., channel quality indication (CQI), precoding matrix indicator (PMI), HARQ ACK , HARQ NACK), resource request information (e.g., scheduling request (SR)), a result of the beam monitoring operation for supporting beamforming functions, a TCI state ID, and measurement information for the active beam (or deactivated beam).

The physical layer control channel may be configured to be transmitted through the primary beam of downlink. In this case, the feedback information may be transmitted and received through the primary beam, and data scheduled by the control information may be transmitted and received through the secondary beam. The physical layer control channel may be configured to be transmitted through the primary beam of uplink. In this case, the resource request information (e.g., SR) and/or the feedback information may be transmitted and received through the primary beam.

In the procedure of allocating the plurality of beams (or the procedure of configuring the TCI states), the allocated (or configured) beam indexes, information indicating a spacing between the beams, and/or information indicating whether contiguous beams are allocated may be transmitted and received through a signaling procedure between the base station and the terminal. The signaling procedure of the beam allocation information may be performed differently according to status information (e.g., movement speed, movement direction, location information) of the terminal and/or the quality of the radio channel. The base station may obtain the status information of the terminal from the terminal. Alternatively, the base station may obtain the status information of the terminal through another method.

The radio resource information may include parameter(s) indicating frequency domain resources (e.g., center frequency, system bandwidth, PRB index, number of PBRs, CRB index, number of CRBs, subcarrier index, frequency offset, etc.) and parameter(s) indicating time domain resources (e.g., radio frame index, subframe index, transmission time interval (TTI), slot index, mini-slot index, symbol index, time offset, and periodicity, length, or window of transmission period (or reception period)). In addition, the radio resource information may further include a hopping pattern of radio resources, information for beamforming (e.g., beam shaping) operations (e.g., beam configuration information, beam index), and information on resources occupied according to characteristics of a code sequence (or bit sequence, signal sequence).

The name of the physical layer channel and/or the name of the transport channel may vary according to the type (or attribute) of data, the type (or attribute) of control information, a transmission direction (e.g., uplink, downlink, sidelink), and the like.

The reference signal for beam (or TCI state) or radio link management may be a synchronization signal (e.g., PSS, SSS, SS/PBCH block), CSI-RS, PT-RS, SRS, DM-RS, or the like. The reference parameter(s) for reception quality of the reference signal for beam (or TCI state) or radio link management may include a measurement time unit, a measurement time interval, a reference value indicating an improvement in reception quality, a reference value indicating a deterioration in reception quality, or the like. Each of the measurement time unit and the measurement time interval may be configured in units of an absolute time (e.g., millisecond, second), TTI, symbol, slot, frame, subframe, scheduling periodicity, operation periodicity of the base station, or operation periodicity of the terminal.

The reference value indicating the change in reception quality may be configured as an absolute value (dBm) or a relative value (dB). In addition, the reception quality of the reference signal for beam (or TCI state) or radio link management may be expressed as a reference signal received power (RSRP), a reference signal received quality (RSRQ), a received signal strength indicator (RSSI), a signal-to -noise ratio (SNR), a signal-to-interference ratio (SIR), or the like.

Meanwhile, in the NR communication system using a millimeter frequency band, flexibility for a channel bandwidth operation for packet transmission may be secured based on a bandwidth part (BWP) concept. The base station may configure up to 4 BWPs having different bandwidths to the terminal. The BWPs may be independently configured for downlink and uplink. That is, downlink BWPs may be distinguished from uplink BWPs. Each of the BWPs may have a different subcarrier spacing as well as a different bandwidth.

Measurement operations (e.g., monitoring operations) for beam (or TCI state) or radio link management may be performed at the base station and/or the terminal. The measurement operation for the beam or radio link management may be performed in the downlink monitoring procedure of the terminal. The base station and/or the terminal may perform the measurement operations (e.g., monitoring operations) according to parameter(s) configured for the measurement operations (e.g., monitoring operations). The terminal may report a measurement result according to parameter(s) configured for measurement reporting.

When a reception quality of a reference signal according to the measurement result meets a preconfigured reference value and/or a preconfigured timer condition, the base station may determine whether to perform a beam (or, radio link) management operation, a beam switching operation, or a beam deactivation (or, activation) operation according to a beam blockage situation. When it is determined to perform a specific operation, the base station may transmit a message triggering execution of the specific operation to the terminal. For example, the base station may transmit a control message for instructing the terminal to execute the specific operation to the terminal. The control message may include configuration information of the specific operation.

When a reception quality of a reference signal according to the measurement result meets a preconfigured reference value and/or a preconfigured timer condition, the terminal may report the measurement result to the base station. Alternatively, the terminal may transmit to the base station a control message triggering a beam (or, radio link) management operation, a beam switching operation (or a TCI state ID change operation, a property change operation), or a beam deactivation operation (or a beam activation operation) according to a beam blockage situation. The control message may request to perform a specific operation or report performance of the specific operation.

A threshold (e.g., criterion value), timer, and/or operation condition for the measurement operation may be configured differently according to the operation state of the terminal or a measurement object. Here, the measurement operation may include an operation of reporting the measurement result. The measurement object may be a base station, cell, frequency, BWP, beam, CORESET, SS/PBCH block, or reference signal. The base station may transmit an RRC message, a MAC message, and/or a PHY message including information indicating the measurement object to the terminal. The measurement object frequency may be the same as the frequency of the serving base station (e.g., serving cell). In this case, the measurement object frequency may be an intra-frequency. Alternatively, the measurement object frequency may be different from that of the serving base station. In this case, the measurement object frequency may be an inter-frequency.

The terminal operating in the RRC connected state may measure signal qualities of radio links of the serving cell and a measurement object cell (e.g., neighbor cell, target cell, candidate cell, etc.) based on the SS/PBCH block and/or the reference signal (e.g., CSI-RS). Here, the signal quality may be a reference signal received power (RSRP), a reference signal received quality (RSRQ), a received signal strength indicator (RSSI), a signal to interference plus noise ratio (SINR), or the like.

When a primary serving cell is changed, the terminal operating in the RRC connected state may change the cell by performing a handover procedure. When the carrier aggregation (CA) function or the dual connectivity (DC) function is supported in the communication system (e.g., LTE/LTE-A communication system or NR communication system), the primary serving cell may be a serving cell performing functions of a primary cell, a primary SCG cell, or a special cell.

When the handover procedure is performed in the LTE/LTE-A communication system, the primary serving cell may be changed through an RRC reconfiguration procedure based on mobility control information (MCI). When the handover procedure is performed in the NR communication system, the primary serving cell may be changed through an 'RRC Reconfiguration with Sync' procedure. The terminal operating in the RRC connected state may measure the SS/PBCH block and/or CSI-RS based on event configuration conditions for support of the mobility function and RRC parameters configured for the measurement operation, and report the measurement result. A gap period may be configured for the measurement operation on the inter-frequency. The base station may inform the terminal of information indicating the gap period using an RRC message, a MAC message, and/or a PHY message. The terminal may not perform a monitoring operation on the serving cell in the gap period. That is, the terminal may perform a measurement operation on the measurement object cell in the gap period.

The terminal operating in the RRC inactive state or the RRC idle state may measure a signal quality (e.g., RSRP, RSRQ, RSSI, SINR) of a radio link of the serving cell (e.g., cell on which the terminal is camped) or a measurement object cell according to a DRX cycle (e.g., measurement cycle) configured based on the SS/PBCH block. The terminal may perform a cell selection operation or a cell reselection operation based on the measurement result. For measurement of the serving cell (e.g., cell on which the cell is camped), the terminal may obtain a transmission periodicity (e.g., *ssb-PeriodicityServingCell*) of the SS/PBCH block or configuration information (e.g., *ssb-PositionsInBurst*) of a radio resource through which the SS/PBCH block is transmitted, from system information of the corresponding cell.

In addition, in order to measure the measurement object cell (e.g., neighbor cell), the terminal may obtain signal measurement time configuration (SMTC) window information from the system information. The terminal operating in the RRC inactive state or the RRC idle state may perform a cell selection operation or a cell reselection operation based on the measurement result of the SS/PBCH block. During the cell selection operation or the cell reselection operation, the terminal may recognize that a radio access network (RAN) area or a tracking area (TA) has been changed based on an identifier included in system information received from the cell. In this case, the terminal may perform an update procedure of the RAN area or TA.

When the measurement operation is performed in the terminal, power consumption of the terminal may increase. Measurement parameters (e.g., measurement periodicity, number of measurement objects, and parameters related to activation/deactivation of the measurement operation) may be adjusted in consideration of attribute of the terminal, operation state of the terminal, speed of the terminal, movement direction of the terminal, position of the terminal, signal quality of the radio link, configuration condition of measurement event, user configuration, user's boarding status, or the like. In order to reduce power consumption of the terminal, the measurement parameters may be relaxed.

The terminal may be classified into a fixed terminal or a mobile terminal according to its attributes. The fixed terminal may be a terminal installed in a specific place to provide an Internet of Thing (IoT) service or a machine type communication (MTC) service. The operation state of the terminal may be classified into the RRC connected state, the RRC inactive state, or the RRC idle state shown in FIG. 7. The speed of the terminal may be classified into a speed A, a speed B, a speed C, and the like. The speed A may be a pedestrian speed. For example, the speed A may be 3 km/h or less. The speed B may be a speed of a high-speed train. For example, the speed B may be 300 km/h or more. The speed C may be a speed of an aerial vehicle. For example, the speed C may be 500 km/h or more.

The movement direction of the terminal may indicate movement information according to a preconfigured path (e.g., track, road, altitude, flight path), change information of the path, movement information based on a cell (e.g., a movement direction away from the center of the cell, a movement direction toward the center of the cell, movement information at the cell boundary, movement information within a certain range from the cell boundary), or the like. The position of the terminal may be a geographic position or a physical position. The position of the terminal may be a position obtained by a positioning reference signal (PRS) of the base station (e.g., cell), a built-in sensor of the terminal, and/or a global positioning system (GPS) signal. In addition, the position of the terminal may indicate whether the camped cell (e.g., serving cell) of the terminal is located indoors or outdoors. The user configuration may include information on a space (e.g., home, office, cell information, base station information) in which the user of the terminal dwells, WiFi configuration information (e.g., WiFi function activation information, WiFi connection information), configuration information of a terminal mode (e.g., airplane mode, indoor mode such as a movie theater), or the like.

The measurement relaxation method may be a method of adjusting the measurement operation (e.g., measurement parameters) performed by the terminal. For example, the measurement periodicity may be increased (or extended), and the number of measurement objects may be decreased. In addition, parameters related to activation of the measurement operation and parameters related to deactivation of the measurement operation may be adjusted. The measurement operation may be classified into a normal measurement operation and a relaxed measurement operation.

Each of the measurement periodicity and the reporting periodicity in the relaxed measurement operation may be longer than each of the measurement periodicity and the reporting periodicity in the normal measurement operation. In addition, the number of measurement objects in the relaxed measurement operation may be smaller than the number of measurement objects in the normal measurement operation. When the relaxed measurement operation is performed, the terminal may perform measurement according to a measurement periodicity longer than that of the normal measurement operation, and may report the measurement result according to a reporting periodicity longer than that of the normal measurement operation. When the relaxed measurement operation is performed, the terminal may perform measurements on the measurement objects less than the measurement objects in the normal measurement operation. In the relaxed measurement operation, the measurement operation for some measurement objects may be deactivated. That is, some measurement objects may be omitted in the relaxed measurement operation.

In the relaxed measurement operation, the terminal may select one or more measurement objects among activated (e.g., preconfigured) measurement objects, and perform a measurement operation on the one or more measurement objects. When the measurement object is a cell (e.g., base station), frequency, BWP, beam, CORESET, or reference signal (e.g., SS/PBCH block, CSI-RS), the selecting of one or more measurement objects may mean selecting of one or more cells, one or more frequencies, one or more BWPs, one or more beams, one or more CORESETs, or one or more reference signals. The base station may transmit condition information (e.g., priority or class configuration information of the measurement objects) for selecting the measurement object for the relaxed measurement operation by using system information or a control message. Here, the terminal may select one or more measurement objects based on a preconfigured criterion (e.g., condition), capability of the terminal, the connection state (e.g., operation state) of the terminal, and/or a service. The terminal may perform measurement operations on the one or more measurement objects, and report the measurement result to the base station. The measurement result may include identification information of the one or more measurement objects selected by the terminal.

The base station may transmit a trigger message indicating execution of the normal measurement operation or the relaxed measurement operation to the terminal. The trigger message may be an RRC message, a MAC message, or a PHY message. Alternatively, the base station may configure an execution condition (e.g., parameter) of each of the normal measurement operation and the relaxed measurement operation, and may transmit information indicating the execution conditions (hereinafter referred to as 'execution condition information') to the terminal. The execution condition information may be transmitted through an RRC message, a MAC message, or a PHY message. The terminal may receive the execution condition information from the base station, and may perform the normal measurement operation or the relaxed measurement operation based on the execution condition information. In addition, the normal measurement operation may be switched to the relaxed measurement operation based on the execution condition information. The relaxed measurement operation may be switched to the normal measurement operation based on the execution condition information.

The parameters for the measurement operation may be included in the *Resource-Config* information or the capability information of the terminal. The base station may generate the *Resource-Config* information or the capability information of the terminal, which includes configuration information for the normal measurement operation and/or configuration information for the relaxed measurement operation, and transmit to the terminal the *Resource-Config* information or the capability information of the terminal. In addition, the configuration information (e.g., execution condition information) for switching between the normal measurement operation and the relaxed measurement operation may be included in the *Resource-Config* information or the capability information of the terminal. Alternatively, the configuration information for switching between the normal measurement operation and the relaxed measurement operation may be included in the configuration information for the normal measurement operation or the configuration information for the relaxed measurement operation. The terminal may receive the *Resource-Config* information or the capability information of the terminal from the base station, and may obtain, from the *Resource-Config* information or the capability information of the terminal, one or more configuration information among the configuration information for the normal measurement operation, the configuration information for the relaxed measurement operation, and the configuration information for switching between the normal measurement operation and the relaxed measurement operation.

The terminal may transmit to the terminal a control message including information indicating whether to support the relaxed measurement operation, information indicating a condition (or, a range or combination of conditions) for the relaxed measurement operation, and parameters (or a range or combination of parameters) for the relaxed measurement operation. The control message may be transmitted to the base station in a connection (re)configuration procedure, a connection release procedure, or a connection re-establishment procedure. Here, the parameters for the relaxed measurement operation may include information indicating whether a measurement and/or reporting operation function on a cell, frequency, frequency band, BWP, beam, CORESET, SS/PBCH block, and/or reference signal is supported or not (e.g., can be configured or not), information on a configuration range (e.g., limit value, minimum value, maximum value) of the corresponding parameters, or the like.

### [Method of switching from the normal measurement operation to the relaxed measurement operation]

The base station may transmit the configuration information for the normal measurement operation, the configuration information for the relaxed measurement operation, and the configuration information for switching between the normal measurement operation and the relaxed measurement operation to the fixed terminal. The base station may instruct the fixed terminal to perform the relaxed measurement operation or the switching from the normal measurement operation to the relaxed measurement operation. The terminal performing the relaxed measurement operation may be a terminal having a remaining battery time less than or equal to a preconfigured time. The switching between the normal measurement operation and the relaxed measurement operation may be performed according to user configuration. When the terminal moves to a cell (e.g., designated cell) registered by the user of the terminal or when the terminal's WiFi function is activated (e.g., when a service using the WiFi function is performed), the terminal may perform the relaxed measurement operation, the operation for switching the normal measurement operation to the relaxed measurement operation, or an operation of transmitting a message (e.g., UE assistance information, control message) requesting switching from the normal measurement operation to the relaxed measurement operation. According to the above-described method, the terminal may select one measurement operation among the normal measurement operation and the relaxed measurement operation by using the configuration information of the measurement operation received from the base station, and may perform the selected measurement operation. The terminal may report indication information indicating the selected measurement operation and/or information of configuration parameters of the selected measurement operation to the base station.

The switching from the normal measurement operation to the relaxed measurement operation may be performed according to the position of the terminal. When the position (e.g., geographic position or physical position) of the terminal is maintained within a preconfigured range (e.g., region) until expiry of a preconfigured timer (e.g., preconfigured time interval), the terminal may perform the relaxed measurement operation, the operation for switching the normal measurement operation to the relaxed measurement operation, or the operation of transmitting a message requesting switching from the normal measurement operation to the relaxed measurement operation. When the position of the terminal satisfies a preconfigured criterion (e.g., condition), the normal measurement operation may be switched to the relaxed measurement operation. Here, the position of the terminal may be measured based on the PRS, the terminal's built-in sensor, and/or the GPS signal. Alternatively, the position of the terminal may be expressed as information of a distance and/or a travelling direction from a specific point (e.g., a cell center or a cell boundary).

The position of the terminal may be determined based on the result of measuring the signal quality of the radio link. For example, when the signal quality of the radio link is greater than or equal to a threshold (e.g., S-measure value) (e.g., the terminal is located within a predefined range (e.g., region) from the cell center) and the measured signal quality satisfies a signal quality condition configured for the switching of the measurement operation, the terminal may perform the relaxed measurement operation, the operation for switching the normal measurement operation to the relaxed measurement operation, or the operation of transmitting a message requesting switching from the normal measurement operation to the relaxed measurement operation. Alternatively, when the signal quality of the radio link satisfies a preconfigured condition (e.g., when the terminal is located within a predefined range (e.g., region) from the cell boundary), the terminal may perform the relaxed measurement operation, the operation for switching the normal measurement operation to the relaxed measurement operation, or the operation of transmitting a message requesting switching from the normal measurement operation to the relaxed measurement operation.

When a change in the signal quality of the radio link between the terminal (e.g., terminal operating in the RRC connected state or the RRC inactive state) and the serving cell or measurement object cell (e.g., neighbor cell) is equal to or greater than a threshold in a preconfigured time interval, the terminal (e.g., terminal operating in the RRC connected state or the RRC inactive state) may determine that the position of the corresponding terminal has been changed from outdoor to indoor. When the change in the signal quality of the radio link between the terminal (e.g., terminal operating in the RRC idle state) and the camped cell or measurement object cell (e.g., neighbor cell) is greater than or equal to a threshold in a preconfigured time interval, the terminal (e.g., terminal operating in the RRC idle state) may determine that the position of the corresponding terminal has been changed from outdoor to indoor. The preconfigured time interval (e.g., time interval according to a timer) may be 2 ms, and the threshold may be 15 dB.

The terminal may switch the normal measurement operation to the relaxed measurement operation based on the measurement result of the signal quality of the radio link. When the change in the signal quality of the radio link in a preconfigured time interval (e.g., time interval according to a timer) satisfies a preconfigured condition, the terminal may perform the relaxed measurement operation, the operation for switching the normal measurement operation to the relaxed measurement operation, or the operation of transmitting a message requesting switching from the normal measurement operation to the relaxed measurement operation.

In addition, the switching of the measurement operation based on the signal quality of the radio link may be performed based on whether a beam is changed. For example, a condition for a beam change (e.g., TCI state change) or a condition for a beam failure detection (or beam failure recovery) is satisfied in a preconfigured time interval (e.g., a window or a time interval according to a timer), the terminal may perform the relaxed measurement operation, the operation for switching the normal measurement operation to the relaxed measurement operation, or the operation of transmitting a message requesting switching from the normal measurement operation to the relaxed measurement operation.

Here, the condition for the beam change (e.g., TCI state change) may be a case when there is no history of beam change in the preconfigured time interval or a case when the number of beam changes (e.g., TCI state changes) in the preconfigured time interval is less than a threshold. The condition for the beam failure detection (or beam failure recovery) may be a case when a beam failure detection (or beam failure recovery) does not occur in the preconfigured time interval or a case when the number of beam failure detections (or beam failure recoveries) in the preconfigured time interval is equal to or less than a threshold.

When it is recognized that the physical position of the terminal has been changed from outdoor to indoor, the corresponding terminal may switch the normal measurement operation to the relaxed measurement operation. That the physical position of the terminal has been changed from outdoor to indoor may be recognized based on a change in network operation information of the mobile network operator, the cell identifier, or the signal quality of the radio link.

The switching from the normal measurement operation to the relaxed measurement operation may be performed according to the speed of the terminal. When the speed of the terminal falls within a speed range for the relaxed measurement operation, the terminal may perform the relaxed measurement operation, the operation for switching the normal measurement operation to the relaxed measurement operation, or the operation of transmitting a message requesting switching from the normal measurement operation to the relaxed measurement operation.

The switching from the normal measurement operation to the relaxed measurement operation may be performed according to the movement direction of the terminal. When the movement direction of the terminal is maintained in a preconfigured time interval (e.g., a time interval according to a timer) or when the movement direction of the terminal is not changed in a preconfigured time interval (e.g., a time interval according to a timer), the terminal may perform the relaxed measurement operation, the operation for switching the normal measurement operation to the relaxed measurement operation, or the operation of transmitting a message requesting switching from the normal measurement operation to the relaxed measurement operation. Here, the terminal may consider both of the movement direction and the signal quality of the radio link together. For example, when the movement direction of the terminal satisfies a preconfigured condition, and the signal quality of the radio link is greater than or equal to a threshold, the terminal may perform the relaxed measurement operation, the operation for switching the normal measurement operation to the relaxed measurement operation, or the operation of transmitting a message requesting switching from the normal measurement operation to the relaxed measurement operation.

When the terminal moves to the cell center, and the signal quality of the radio link is greater than or equal to a threshold, the terminal may perform the relaxed measurement operation, the operation for switching the normal measurement operation to the relaxed measurement operation, or the operation of transmitting a message requesting switching from the normal measurement operation to the relaxed measurement operation.

The switching from the normal measurement operation to the relaxed measurement operation may be performed according to the signal quality of the radio link. When the signal quality of the radio link measured by the terminal satisfies one or more of the following conditions, the terminal may perform the relaxed measurement operation, the operation for switching the normal measurement operation to the relaxed measurement operation, or the operation of transmitting a message requesting switching from the normal measurement operation to the relaxed measurement operation.
- Condition #1: The signal quality of the radio link of the serving cell is greater than or equal to a preconfigured threshold, and the signal quality of the radio link of the measurement object cell (e.g., neighbor cell, target cell, candidate cell) is less than a preconfigured threshold.
- Condition #2: The signal quality of the radio link of the measurement object cell (e.g., neighbor cell, target cell, candidate cell) is greater than or equal to a preconfigured threshold.
- Condition #3: The signal quality of the radio link for the serving cell (e.g., cell on which the terminal is camped), active BWP, active beam, or configured beam is greater than or equal to a preconfigured threshold.
- Condition #4: The signal quality of the radio link in a preconfigured time interval (e.g., L1 or L3 filtering window) is greater than or equal to a preconfigured threshold.
- Condition #5: The signal quality condition of the radio link, which is configured for the switching from the normal measurement operation to the relaxed measurement operation, and/or a related timer condition are satisfied.
- Condition #6: The path loss(es) (e.g., fluctuation of the path loss(es)) of the serving cell, the measurement object cell, and/or the measurement object frequency satisfy conditions configured for the switching from the normal measurement operation to the relaxed measurement operation.
- Condition #7: The condition for determining whether a beam is changed (e.g., TCI state change), which is configured for the switching from the normal measurement operation to the relaxed measurement operation, and a related timer condition are satisfied

The switching from the normal measurement operation to the relaxed measurement operation may be performed according to the user's boarding status. The user's boarding status may be identified by a sensor included in the user's terminal or other methods. When the above-described switching condition(s) of the measurement operation are satisfied (e.g., when the user does not board a vehicle), the terminal may perform the relaxed measurement operation, the operation for switching the normal measurement operation to the relaxed measurement operation, or the operation of transmitting a message requesting switching from the normal measurement operation to the relaxed measurement operation. Alternatively, when the above-described switching condition(s) of the measurement operation are satisfied, the terminal may switch the relaxed measurement operation to the normal measurement operation.

The switching from the normal measurement operation to the relaxed measurement operation may be performed according to the operation state of the terminal. The configuration condition (e.g., parameter) for the switching from the normal measurement operation to the relaxed measurement operation may be configured differently according to the RRC connected state, RRC inactive state, or RRC idle state. For example, the measurement object cell or the measurement object frequency of the signal quality of the radio link may be configured differently according to the operation state of the terminal. The terminal operating in the RRC connected state or the RRC inactive state may use measurement results of signal qualities of radio links of the serving cell (or frequency of the serving cell) and a predefined neighbor cell (or frequency of the neighbor cell) to determine whether the switching condition between the normal measurement operation and the relaxed measurement operation is satisfied. The terminal operating in the RRC idle state may determine whether the switching condition between the normal measurement operation and the relaxed measurement operation is satisfied by using the measurement result of the signal quality of the radio link for the camped cell (or frequency of the camped cell). Alternatively, when the switching from the normal measurement operation to the relaxed measurement operation is performed according to the speed of the terminal, a threshold for the speed of the terminal may be configured differently for each of the RRC connected state, RRC inactive state, and RRC idle state.

When the terminal operating in the RRC inactive state or the RRC idle state is located in a cell selected by the last cell selection operation or the last cell reselection operation for a time period equal to or longer than a preconfigured time from a time point of camping on the corresponding cell, or when a signal quality or a change in the signal quality of the radio link of the corresponding cell is equal to or greater than a threshold in a preconfigured time interval (or, time interval according to a timer), the terminal may perform the relaxed measurement operation, the operation for switching the normal measurement operation to the relaxed measurement operation, or the operation of transmitting a message requesting switching from the normal measurement operation to the relaxed measurement operation. When a signal quality or a change in the signal quality of the radio link, from a last time point of periodic or aperiodic measurement reporting or a time point (e.g., slot, minislot, slot, subframe, frame) according to a time domain offset configured for switching from the normal measurement operation to the relaxed measurement operation to a time point of timer expiry, satisfies a reference condition, the terminal may perform the relaxed measurement operation, the operation for switching the normal measurement operation to the relaxed measurement operation, or the operation of transmitting a message requesting switching from the normal measurement operation to the relaxed measurement operation. In this case, when the above-described other parameter(s) are satisfied together with the position of the terminal, the terminal may perform the relaxed measurement operation, the operation for switching the normal measurement operation to the relaxed measurement operation, or the operation of transmitting a message (e.g., UE assistance message) requesting switching from the normal measurement operation to the relaxed measurement operation.

In addition, one or more of the attribute of the terminal, the operation state of the terminal, the speed of the terminal, the movement direction of the terminal, the position of the terminal, the signal quality of the radio link, the measurement event configuration condition, the user configuration, and the user's boarding status satisfy a preconfigured condition, the terminal may perform the relaxed measurement operation, the operation for switching the normal measurement operation to the relaxed measurement operation, or the operation of transmitting a message requesting switching from the normal measurement operation to the relaxed measurement operation.

When the condition for the switching from the normal measurement operation to the relaxed measurement operation is satisfied, the terminal may transmit to base station a control message to request switching from the normal measurement operation to the relaxed measurement operation, or to indicate switching from the normal measurement operation to the relaxed measurement operation. However, the terminal operating in the RRC inactive state or the RRC idle state may perform the relaxed measurement operation or the operation for switching from the normal measurement operation to the relaxed measurement operation without transmitting the above-described control message.

When the control message requesting switching from the normal measurement operation to the relaxed measurement operation is received from the terminal, when a control message indicating that the normal measurement operation has been switched to the relaxed measurement operation is received from the terminal, or when the condition for switching the normal measurement operation to the relaxed measurement operation is satisfied, the base station may transmit to the terminal a control message instructing to perform the relaxed measurement operation or a control message instructing to switch from the normal measurement operation to the relaxed measurement operation or acknowledging the reception of the message.

### [Method of switching from the relaxed measurement operation to the normal measurement operation]

The switching from the relaxed measurement operation to the normal measurement operation may be performed according to user configuration. When the terminal moves out of a cell registered by the user (e.g., a designated cell, a registered position, a designated cell), when a WiFi function of the terminal is deactivated, or when the WiFi service is stopped, the terminal may perform the normal measurement operation, the operation for switching the relaxed measurement operation to the normal measurement operation, or an operation of transmitting a message (e.g., UE assistance information, control message) requesting switching from the relaxed measurement operation to the normal measurement operation.

The switching from the relaxed measurement operation to the normal measurement operation may be performed according to the position of the terminal. When the position (e.g., geographic position or physical position) of the terminal is outside of a preconfigured range (e.g., region) before expiry of a preconfigured timer (e.g., preconfigured time interval), the terminal may perform the normal measurement operation, the operation for switching the relaxed measurement operation to the normal measurement operation, or the operation of transmitting a message requesting switching from the relaxed measurement operation to the normal measurement operation. Here, the position of the terminal may be measured based on the PRS, the terminal's built-in sensor, and/or the GPS signal. Alternatively, the position of the terminal may be expressed as information of a distance and/or a travelling direction from a specific point (e.g., a cell center or a cell boundary).

The position of the terminal may be determined based on the result of measuring the signal quality of the radio link. For example, even when the signal quality of the radio link is greater than or equal to a threshold (e.g., S-measure value) (e.g., the terminal is located within a predefined range (e.g., region) from the cell center), if the measured signal quality satisfies a signal quality condition configured for the switching between the normal and relaxed measurement operations, the terminal may perform the normal measurement operation, the operation for switching the relaxed measurement operation to the normal measurement operation, or the operation of transmitting a message requesting switching from the relaxed measurement operation to the normal measurement operation. Alternatively, when the signal quality of the radio link satisfies a preconfigured condition (e.g., when the terminal is located within a predefined range (e.g., region) from the cell boundary), the terminal may perform the normal measurement operation, the operation for switching the relaxed measurement operation to the normal measurement operation, or the operation of transmitting a message requesting switching from the relaxed measurement operation to the normal measurement operation.

For example, the terminal operating in the RRC connected state or the RRC inactive state may identify the position of the terminal based on a change in the signal quality of the radio link between the corresponding terminal and the serving cell or the measurement object cell (e.g., neighbor cell) in a preconfigured time interval. In addition, the terminal operating in the RRC idle state may identify the position of the terminal based on a change in the signal quality of the radio link between the corresponding terminal and the camped cell or the measurement object cell (e.g., neighbor cell) in a preconfigured time interval. The preconfigured time interval may be 2 ms, and the threshold may be 15 dB.

The terminal may switch the relaxed measurement operation to the normal measurement operation based on the measurement result of the signal quality of the radio link. When the change in the signal quality of the radio link in a preconfigured time interval (e.g., a time interval according to a timer) satisfies a preconfigured condition, the terminal may perform the normal measurement operation, the operation for switching the relaxed measurement operation to the normal measurement operation, or the operation of transmitting a message requesting switching from the relaxed measurement operation to the normal measurement operation.

In addition, the switching of the measurement operation based on the signal quality of the radio link may be performed based on whether a beam is changed. For example, a condition for a beam change (e.g., TCI state change) or a condition for a beam failure detection (or beam failure recovery) is satisfied in a preconfigured time interval (e.g., a window or a time interval according to a timer), the terminal may perform the normal measurement operation, the operation for switching the relaxed measurement operation to the normal measurement operation, or the operation of transmitting a message requesting switching from the relaxed measurement operation to the normal measurement operation.

Here, the condition for the beam change (e.g., TCI state change) may be a case when a beam change occurs during the relaxed measurement operation or a case when the number of beam changes (e.g., TCI state changes) in the preconfigured time interval exceeds a threshold. The condition for the beam failure detection (or beam failure recovery) may be a case when a beam failure detection (or beam failure recovery) occurs during the relaxed measurement operation or a case when the number of beam failure detections (or beam failure recoveries) in the preconfigured time interval exceeds a threshold.

When it is recognized that the physical position of the terminal has been changed from indoor to outdoor, the corresponding terminal may switch the relaxed measurement operation to the normal measurement operation. That the physical position of the terminal has been changed from indoor to outdoor may be recognized based on a change in network operation information of the mobile network operator, the cell identifier, or the signal quality of the radio link.

The switching from the relaxed measurement operation to the normal measurement operation may be performed according to the speed of the terminal. When the speed of the terminal falls within a speed range for the normal measurement operation, the terminal may perform the normal measurement operation, the operation for switching the relaxed measurement operation to the normal measurement operation, or the operation of transmitting a message requesting switching from the relaxed measurement operation to the normal measurement operation.

The switching from the relaxed measurement operation to the normal measurement operation may be performed according to the movement direction of the terminal. When the terminal deviates from a preconfigured path, when the movement direction (e.g., movement path) of the terminal is changed, or when the signal quality of the radio link measured by the terminal moving along a preconfigured path is less than a threshold, the terminal may perform the normal measurement operation, the operation for switching the relaxed measurement operation to the normal measurement operation, or the operation of transmitting a message requesting switching from the relaxed measurement operation to the normal measurement operation.

When the terminal moves from the cell center to the cell boundary, and the signal quality of the radio link is less than a threshold, the terminal may perform the normal measurement operation, the operation for switching the relaxed measurement operation to the normal measurement operation, or the operation of transmitting a message requesting switching from the relaxed measurement operation to the normal measurement operation.

The switching from the relaxed measurement operation to the normal measurement operation may be performed according to the signal quality of the radio link. When the signal quality of the radio link measured by the terminal satisfies one or more of the following conditions, the terminal may perform the normal measurement operation, the operation for switching the relaxed measurement operation to the normal measurement operation, or the operation of transmitting a message requesting switching from the relaxed measurement operation to the normal measurement operation.
- Condition #1: The signal quality of the radio link of the measurement object cell (e.g., neighbor cell, target cell, candidate cell) is less than a preconfigured threshold or when the path loss for the cell or frequency satisfies a preconfigured condition.
- Condition #2: The signal quality of the radio link of the serving cell (e.g., cell on which the terminal is camped), active BWP, active beam, or configured beam is below a preconfigured threshold or the path loss for the cell or frequency satisfies a preconfigured condition.
- Condition #3: The signal quality of the radio link does not satisfy a preconfigured threshold in a preconfigured time interval (e.g., L1 or L3 filtering window). That is, the signal quality of the radio link in a preconfigured time interval is less than or equal to a preconfigured threshold.
- Condition #4: The signal quality condition of the radio link, which is configured for the switching from the relaxed measurement operation to the normal measurement operation, and/or related timer condition are satisfied.

The switching from the relaxed measurement operation to the normal measurement operation may be performed according to the user's boarding status. The user's boarding status may be identified by a sensor included in the user's terminal or other methods. When the above-described switching condition(s) of the measurement operation are satisfied (e.g., when the user boards a vehicle), the terminal may perform the normal measurement operation, the operation for switching the relaxed measurement operation to the normal measurement operation, or the operation of transmitting a message requesting switching from the relaxed measurement operation to the normal measurement operation.

The switching from the relaxed measurement operation to the normal measurement operation may be performed according to the operation state of the terminal. The configuration condition (e.g., parameter) for the switching from the relaxed measurement operation to the normal measurement operation may be configured differently according to the RRC connected state, RRC inactive state, or RRC idle state. For example, the measurement object cell or the measurement object frequency of the signal quality of the radio link may be configured differently according to the operation state of the terminal. The terminal operating in the RRC connected state or the RRC inactive state may use measurement results of signal qualities of radio links for the serving cell (or frequency of the serving cell) and a predefined neighbor cell (or frequency of the neighbor cell) to determine whether the switching condition between the relaxed measurement operation and the normal measurement operation is satisfied. The terminal operating in the RRC idle state may determine whether the switching condition between the relaxed measurement operation and the normal measurement operation is satisfied by using the measurement result of the signal quality of the radio link for the camped cell (or frequency of the camped cell).

Alternatively, when the switching from the relaxed measurement operation to the normal measurement operation is performed according to the speed of the terminal, a threshold for the speed of the terminal may be configured differently for each of the RRC connected state, RRC inactive state, and RRC idle state.

When the terminal operating in the RRC inactive state or the RRC idle state is located in a cell selected by the last cell selection operation or the last cell reselection operation for a time period equal to or longer than a preconfigured time, or when a signal quality of the radio link of the cell is equal to or less than a threshold, and a change in the signal quality is greater than or equal to a threshold in a preconfigured time interval (or, time interval according to a timer), the terminal may perform the normal measurement operation, the operation for switching the relaxed measurement operation to the normal measurement operation, or the operation of transmitting a message requesting switching from the relaxed measurement operation to the normal measurement operation. When a signal quality or a change in the signal quality of the radio link, from a last time point of periodic or aperiodic measurement reporting or a time point (e.g., slot, minislot, slot, subframe, frame) according to a time domain offset configured for switching between the normal measurement operation and the relaxed measurement operation to a time point of timer expiry, satisfies a reference condition, the terminal operating in the RRC connected state may perform the normal measurement operation, the operation for switching the relaxed measurement operation to the normal measurement operation, or the operation of transmitting a message requesting switching from the relaxed measurement operation to the normal measurement operation. In this case, when the above-described other parameter(s) are satisfied together with the position of the terminal, the terminal may perform the normal measurement operation, the operation for switching the relaxed measurement operation to the normal measurement operation, or the operation of transmitting a message (e.g., UE assistance information) requesting switching from the relaxed measurement operation to the normal measurement operation

The switching from the relaxed measurement operation to the normal measurement operation may be performed according to the attribute of the terminal. When the terminal includes a separate power supply device or when the remaining battery time of the terminal is longer than a preconfigured time, the terminal may perform the normal measurement operation, the operation for switching the relaxed measurement operation to the normal measurement operation, or the operation of transmitting a message requesting switching from the relaxed measurement operation to the normal measurement operation.

In addition, one or more of the attribute of the terminal, the operation state of the terminal, the speed of the terminal, the movement direction of the terminal, the position of the terminal, the signal quality of the radio link, measurement event configuration conditions, user configuration, and the user's boarding status satisfy a preconfigured condition, the terminal may perform the normal measurement operation, the operation for switching the relaxed measurement operation to the normal measurement operation, or the operation of transmitting a message requesting switching from the relaxed measurement operation to the normal measurement operation.

When the condition for the switching from the relaxed measurement operation to the normal measurement operation is satisfied, the terminal may transmit to the base station a control message requesting switching from the relaxed measurement operation to the normal measurement operation or a control message indicating that the relaxed measurement operation has been switched to the normal measurement operation. However, the terminal operating in the RRC inactive state or the RRC idle state may perform the normal measurement operation or the operation for switching from the relaxed measurement operation to the normal measurement operation without transmitting the above-described control message.

When the control message requesting switching from the relaxed measurement operation to the normal measurement operation is received from the terminal, when a control message indicating that the relaxed measurement operation has been switched to the normal measurement operation is received from the terminal, or when the condition for switching the relaxed measurement operation to the normal measurement operation is satisfied, the base station may transmit to the terminal a control message instructing to perform the normal measurement operation or a control message instructing to switch from the relaxed measurement operation to the normal measurement operation.

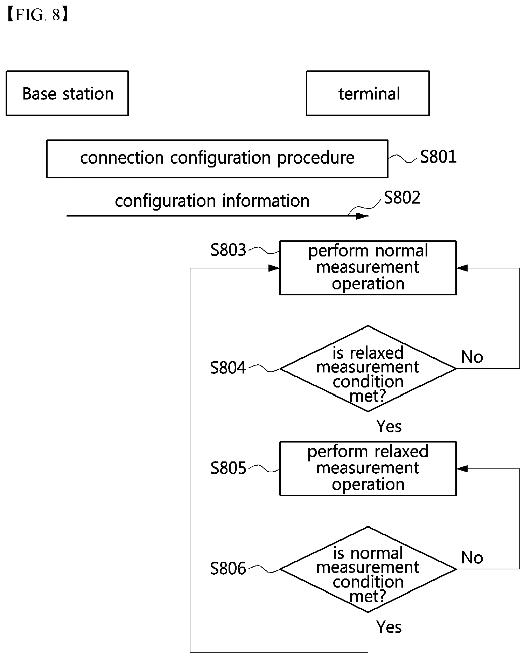

FIG. 8 is a sequence chart illustrating a first exemplary embodiment of a method for switching between a normal measurement operation and a relaxed measurement operation in a communication system.

Referring to FIG. 8, a communication system may include a base station and a terminal. The base station may be the base station 110-1, 110-2, 110-3, 120-1, or 120-2 shown in FIG. 1, and the terminal may be the terminal 130-1, 130-2, 130-3, 130-4, 130-5, or 130-6 shown in FIG. 1. The base station and the terminal may be configured to be the same or similar to the communication node 200 shown in FIG. 2.

The terminal may perform a connection configuration procedure with the base station (S801). When the connection configuration between the terminal and the base station is completed, the terminal may operate in the RRC connected state. In the connection configuration procedure, the terminal may transmit capability information including information indicating whether the corresponding terminal supports the relaxed measurement operation to the base station. In addition, the terminal may transmit to the base station information (e.g., the attribute of the terminal, the movement direction of the terminal, the position of the terminal, the speed of the terminal, the user configuration, the user's boarding status, etc.) required for switching between the normal measurement operation and the relaxed measurement operation in the connection configuration procedure.

The base station may receive the capability information from the terminal, and may identify whether the terminal supports the relaxed measurement operation based on the capability information. In addition, the base station may receive the information required for switching between the normal measurement operation and the relaxed measurement operation from the terminal. When the relaxed measurement operation is supported by the terminal and the base station, the base station may transmit information indicating that the relaxed measurement operation is supported to the terminal by using an RRC message, a MAC message, or a PHY message. When the relaxed measurement operation is not supported by the base station, the base station may transmit information indicating that the relaxed measurement operation is not supported to the terminal by using an RRC message, a MAC message, or a PHY message.

The base station may transmit to the terminal configuration information for the normal measurement operation, configuration information for the relaxed measurement operation, and configuration information for switching between the normal measurement operation and the relaxed measurement operation through one or more of an RRC message, a MAC message, and a PHY message (S802). The configuration information for switching between the normal measurement operation and the relaxed measurement operation may be included in the configuration information for the normal measurement operation and/or the configuration information for the relaxed measurement operation. When the relaxed measurement operation is supported by the terminal and the base station, the base station may transmit to the terminal not only the configuration information for the normal measurement operation, but also the configuration information for the relaxed measurement operation and the configuration information for switching between the normal measurement operation and the relaxed measurement operation.

The terminal operating in the RRC connected state may perform steps after the step S802 based on the configuration information received from the base station. The steps after the step S802 may be performed by the terminal operating in the RRC connected state, the RRC idle state, or the RRC inactive state. After the step S802, the operation state of the terminal may transition from the RRC connected state to the RRC idle state. In this case, the terminal operating in the RRC idle state may perform the steps after the step S802 based on the configuration information (e.g., configuration information obtained in the step S802) obtained before releasing the connection configuration. After the step S802, the operation state of the terminal may transition from the RRC connected state to the RRC inactive state. In this case, the terminal operating in the RRC inactive state may perform the steps after the step S802 based on the configuration information (e.g., configuration information obtained in the step S802) obtained from the last serving cell.

The terminal may perform the normal measurement operation based on the configuration information obtained from the base station (S803). For example, the terminal may perform a radio link monitoring operation based on the configuration information for the normal measurement operation. When a default measurement operation is the normal measurement operation, the normal measurement operation may be performed in the step S803. When the default measurement operation is the relaxed measurement operation, the relaxed measurement operation may be performed in the step S803 instead of the normal measurement operation. Alternatively, when a condition for performing the normal measurement operation is satisfied, the terminal may perform the normal measurement operation in the step S803. When a condition for performing the relaxed measurement operation is satisfied, the terminal may perform the relaxed measurement operation in the step S803.

The terminal may identify whether the measurement result of the step S803 satisfies a relaxed measurement condition(s) (e.g., condition(s) for switching from the normal measurement operation to the relaxed measurement operation) (S804). When the relaxed measurement operation is performed in the step S803, the terminal may identify whether the measurement result of the step S803 satisfies a normal measurement condition(s) (e.g., condition(s) for switching from the relaxed measurement operation to the normal measurement operation). When the measurement result of the step S803 does not satisfy the relaxed measurement condition(s) or the normal measurement condition(s), the terminal may perform the step S803 again.

When the measurement result of the step S803 satisfies the relaxed measurement condition(s), the terminal transmits to the base station a message (e.g., control message) requesting switching from the normal measurement operation to the relaxed measurement operation or a message (e.g., control message) triggering execution of the relaxed measurement operation. The base station may receive the message requesting switching from the normal measurement operation to the relaxed measurement operation or the message triggering the execution of the relaxed measurement operation from the terminal.

When the switching from the normal measurement operation to the relaxed measurement operation is allowed, the base station may transmit a message (e.g., control message) instructing to perform the relaxed measurement operation. When the message instructing to perform the relaxed measurement operation is received from the base station, the terminal may perform the relaxed measurement operation based on the configuration information obtained from the base station (S805). For example, the terminal may perform a radio link monitoring operation based on the configuration information for the relaxed measurement operation.

When the switching from the normal measurement operation to the relaxed measurement operation is not allowed, the base station may transmit a message (e.g., control message) indicating that the relaxed measurement operation is not allowed to be performed. When the message indicating that the relaxed measurement operation is not allowed to be performed is received from the base station, the terminal may perform the normal measurement operation instead of the relaxed measurement operation.

Alternatively, when the measurement result of the step S803 satisfies the relaxed measurement condition(s), the terminal may switch the normal measurement operation to the relaxed measurement operation, and perform the relaxation measurement operation based on the configuration information obtained from the base station (S805). For example, the terminal may perform a radio link monitoring operation based on the configuration information for the relaxed measurement operation. That is, the terminal may perform the relaxed measurement operation without transmitting a message requesting to switch from the normal measurement operation to the relaxed measurement operation or a message triggering execution of the relaxed measurement operation. In this case, the terminal may transmit to the base station a message (e.g., control message) indicating that the normal measurement operation has been switched to the relaxed measurement operation or a message (e.g., control message) indicating that the relaxed measurement operation is performed. The base station may identify that the relaxed measurement operation is performed in the terminal based on the message received from the terminal.

The terminal may identify whether the measurement result (e.g., the result of the relaxed measurement operation) of the step S805 satisfies the normal measurement condition(s) (e.g., condition(s) for switching from the relaxed measurement operation to the normal measurement operation) (S806). When the measurement result of the step S805 does not satisfy the normal measurement condition(s), the terminal may perform the step S805 again.

When the measurement result of the step S805 satisfies the normal measurement condition(s), the terminal may transmit to the base station a message (e.g., control message) requesting switching from the relaxed measurement operation to the normal measurement operation or a message (e.g., control message) triggering execution of the normal measurement operation. The base station may receive the message requesting switching from the relaxed measurement operation to the normal measurement operation or the message triggering execution of the normal measurement operation from the terminal.

When the switching from the relaxed measurement operation to the normal measurement operation is allowed, the base station may transmit a message (e.g., control message) instructing to perform the normal measurement operation. When the message instructing to perform the normal measurement operation is received from the base station, the terminal may perform the normal measurement operation based on the configuration information obtained from the base station (S803).

When the switching from the relaxed measurement operation to the normal measurement operation is not allowed, the base station may transmit a message (e.g., control message) indicating that the normal measurement operation is not allowed to be performed. When the message indicating that the normal measurement operation is not allowed to be performed is received from the base station, the terminal may perform the relaxed measurement operation instead of the normal measurement operation.

Alternatively, when the measurement result of the step S806 satisfies the normal measurement condition(s), the terminal may switch the relaxed measurement operation to the normal measurement operation, and perform the normal measurement operation based on the configuration information obtained from the base station (S803). That is, the terminal may perform the normal measurement operation without transmitting a message requesting to switch from the relaxed measurement operation to the normal measurement operation or a message triggering execution of the normal measurement operation. In this case, the terminal may transmit to the base station a message (e.g., control message) indicating that the relaxed measurement operation has been switched to the normal measurement operation or a message (e.g., control message) indicating that the normal measurement operation is performed. The base station may identify that the normal measurement operation is performed in the terminal based on the message received from the terminal.

Meanwhile, when the relaxed measurement operation is performed in the step S803 and the measurement result of the step S803 satisfies the normal measurement condition(s), the terminal may transmit to the base station a message (e.g., control message) requesting switching from the relaxed measurement operation to the normal measurement operation or a message (e.g., control message) triggering execution of the normal measurement operation. The base station may receive the message requesting switching from the relaxed measurement operation to the normal measurement operation or the message triggering execution of the normal measurement operation from the terminal.

When the switching from the relaxed measurement operation to the normal measurement operation is allowed, the base station may transmit a message (e.g., control message) instructing to perform the normal measurement operation. When the message instructing to perform the normal measurement operation is received from the base station, the terminal may perform the normal measurement operation in the step S805 based on the configuration information obtained from the base station. When the switching from the relaxed measurement operation to the normal measurement operation is not allowed, the base station may transmit a message (e.g., control message) indicating that the normal measurement operation is not allowed to be performed. When the message indicating that the normal measurement operation is not allowed to be performed is received from the base station, the terminal may perform the relaxed measurement operation instead of the normal measurement operation. Alternatively, when the measurement result of the step S803 satisfies the normal measurement condition(s), the terminal may switch the relaxed measurement operation to the normal measurement operation. In the step S805, the terminal may perform the relaxed measurement operation based on the configuration information obtained from the base station.

The terminal may identify whether the measurement result (e.g., the result of the normal measurement operation) in the step S805 satisfies the relaxed measurement condition(s) (e.g., condition(s) for switching from the normal measurement operation to the relaxed measurement operation) (S806). When the measurement result of the step S805 does not satisfy the relaxed measurement condition(s), the terminal may perform the normal measurement operation again.

When the measurement result of the step S805 satisfies the relaxed measurement condition(s), the terminal may transmit to the base station a message (e.g., control message) requesting switching from the normal measurement operation to the relaxed measurement operation or a message (e.g., control message) triggering execution of the relaxed measurement operation. The base station may receive the message requesting switching from the normal measurement operation to the relaxed measurement operation or the message triggering execution of the relaxed measurement operation from the terminal.

When the switching from the normal measurement operation to the relaxed measurement operation is allowed, the base station may transmit a message (e.g., control message) instructing to perform the relaxed measurement operation. When the message instructing to perform the relaxed measurement operation is received from the base station, the terminal may perform the relaxed measurement operation based on the configuration information obtained from the base station (S803).

When the switching from the normal measurement operation to the relaxed measurement operation is not allowed, the base station may transmit a message (e.g., control message) indicating that the relaxed measurement operation is not allowed to be performed. When the message indicating that the relaxed measurement operation is not allowed to be performed is received from the base station, the terminal may perform the normal measurement operation instead of the relaxed measurement operation. Alternatively, when the measurement result of the step S806 satisfies the relaxed measurement condition(s), the terminal may switch the normal measurement operation to the relaxed measurement operation. In the step S803, the terminal may perform the relaxed measurement operation based on the configuration information obtained from the base station.

Meanwhile, the terminal may perform the step S804 or the step S 806 based on the attribute of the terminal, the operation state of the terminal, the speed of the terminal, the movement direction of the terminal, the position of the terminal, the signal quality of the radio link, the measurement event configuration condition, the user configuration, or the user's boarding status. In order to support this operation, the terminal may periodically or a periodically transmit to the base station a control message indicating one or more of the attribute of the terminal, the operation state of the terminal, the speed of the terminal, the movement direction of the terminal, the position of the terminal, the signal quality of the radio link, the measurement event configuration condition, the user configuration, or the user's boarding status. Here, in the aperiodic transmission of the control message, the control message may be transmitted to the base station when a preconfigured condition is satisfied.

In addition, the terminal may transmit control information indicating that an external power supply device is connected to the terminal or control information indicating that a low power consumption operation for the terminal is unnecessary. In this case, the terminal may deactivate (e.g., release) DRX operations and/or the above-described relaxed measurement operation in the RRC connected state. That is, the terminal may deactivate (e.g., release) the operations for reducing power consumption. The base station may receive the control information from the terminal, and stop, deactivate, or release the operations for reducing power consumption of the terminal according to the received control information.

Meanwhile, two measurement modes (e.g., normal measurement operation and relaxed measurement operation) have been described, but two or more measurement modes may be configured. The above-described exemplary embodiments may be applied even when two or more measurement modes are configured. For example, according to the above-described exemplary embodiments, parameters for the measurement operations of two or more measurement modes and/or conditions (e.g., parameters, triggering events) for switching between the measurement modes may be configured by using one or more of system information and control messages.

When the switching condition of the measurement mode is satisfied, the switching of the measurement mode may be requested or indicated using the control message described above. When two or more measurement modes are configured, the terminal may transmit control information (e.g., control information indicating preference of a measurement mode) requesting to perform a specific measurement mode. The base station may transmit control information indicating performance of a specific measurement mode. The terminal may receive configuration parameters for the measurement mode from the base station, and may perform the measurement operation using the configuration parameters according to the above-described exemplary embodiments.

In the above-described exemplary embodiments, the message (e.g., control message) may be an RRC message, a MAC message, or a PHY message. Here, the control message may be the control message including the configuration information for switching between the normal measurement operation and the relaxed measurement operation, the control message triggering switching between the normal measurement operation and the relaxed measurement operation, a control message triggering switching between a plurality of measurement modes, a control message allowing switching between a plurality of measurement modes, the control message indicating that the switching between the normal measurement action and the relaxed measurement action is complete, a control message to indicate (e.g., allow) deactivation of the measurement operation, a control message indicating activation of the measurement operation, or the like.

Here, the control message may include information indicating a specific operation or information indicating a preferred operation for switching/deactivating the measurement operation described above. For example, the terminal may inform the base station of the switching/deactivation of the measurement operation by using an RRC control message (e.g., RRC connection (re)configuration message, RRC connection release message, RRC connection re-establishment message, etc.). Alternatively, the base station may instruct the terminal to switch/deactivate the measurement operation by using an RRC control message.

In addition, the terminal may inform the base station of the switching/deactivation of the measurement operation by using a MAC control message (e.g., MAC CE). Alternatively, the base station may instruct the terminal to switch/deactivate the measurement operation by using a MAC control message. In this case, each of the MAC control messages may be distinguished by a separate logical channel ID (LCID). The MAC control message may be configured in form of a MAC (sub)header and/or a MAC subPDU including a logical channel identifier. In this case, the switching/deactivation of the measurement operation may be indicated by only the logical channel identifier.

The periodicities of the switching from the normal measurement operation to the relaxed measurement operation, the switching from the relaxed measurement operation to the normal measurement operation, the measurement operation between multiple measurement modes, and a triggering condition, timer, and measurement periodicity for deactivation of the measurement operation may be set to a multiple of DRX-related parameter (e.g., operation cycle, measurement cycle, reporting cycle). The triggering condition, timer, and measurement periodicity for the measurement operation or deactivation of the measurement operation may start from a starting time point or ending time point of the operation (e.g., cell reselection operation, measurement operation, and reporting operation) last performed by the terminal.

In the intra-frequency measurement procedure, the measurement operation for a configured non-active BWP instead of the active BWP of the serving cell (e.g., cell on which the terminal is camped) or a system bandwidth of a serving cell not configured in the terminal may be performed.

In the present disclosure, the base station (or cell) may refer to a node B (NodeB), an evolved NodeB, a base transceiver station (BTS), a radio base station, a radio transceiver, an access point, an access node, a road side unit (RSU), a radio remote head (RRH), a transmission point (TP), a transmission and reception point (TRP), or a gNB. In addition, the base station (or, cell) may a CU node or a DU node to which the functional split is applied.

In the present disclosure, the terminal may refer to a UE, a terminal, an access terminal, a mobile terminal, a station, a subscriber station, a mobile station, a portable subscriber station, a node, a device, an Internet of Thing (IoT) device, or a mounted apparatus (e.g., a mounted module/device/terminal or an on-board device/terminal).

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a terminal operating in a radio resource control (RRC) connected state in a communication system, the operation method comprising:
receiving first configuration information for a normal measurement operation from a serving base station;
receiving second configuration information for a relaxed measurement operation from the serving base station;
measuring a channel quality for the serving base station by performing the normal measurement operation using the first configuration information; and
when a condition for the relaxed measurement operation is satisfied, measuring a channel quality for the serving base station by performing the relaxed measurement operation using the second configuration information,
wherein the first configuration information is configured differently from the second configuration information, and power consumption of the terminal according to the relaxed measurement operation is lower than power consumption of the terminal according to the normal measurement operation.

2. The operation method according to claim 1, wherein each of the first configuration information and the second configuration information is configured for each operation state of the terminal, and the operation state includes the RRC connected state, an RRC inactive state, and an RRC idle state.

3. The operation method according to claim 1, wherein each of the first configuration information and the second configuration information includes periodicity information and measurement object information, a periodicity of the normal measurement operation is shorter than a periodicity of the relaxed measurement operation, and measurement objects of the normal measurement operation are more than measurement objects of the relaxed measurement operation.

4. The operation method according to claim 1, wherein when a speed of the terminal satisfies a preconfigured criterion, the relaxed measurement operation is performed instead of the normal measurement operation.

5. The operation method according to claim 1, wherein when a position of the terminal satisfies a preconfigured criterion, the relaxed measurement operation is performed instead of the normal measurement operation.

6. The operation method according to claim 1, wherein when a change in the channel quality measured by the normal measurement operation satisfies a preconfigured criterion, the relaxed measurement operation is performed instead of the normal measurement operation.

7. The operation method according to claim 1, wherein the measuring of the channel quality by performing the relaxed measurement operation comprises:
transmitting a first message to the serving base station, the first message requesting switching from the normal measurement operation to the relaxed measurement operation;
receiving a second message from the serving base station, the second message allowing the switching from the normal measurement operation to the relaxed measurement operation; and
when the switching from the normal measurement operation to the relaxed measurement operation is allowed, performing the relaxed measurement operation.

8. The operation method according to claim 1, wherein the channel quality includes a channel quality between the serving base station and the terminal and channel qualities between the terminal and one or more neighbor base stations.

9. The operation method according to claim 1, further comprising when a condition for the normal measurement operation is satisfied, switching the relaxed measurement operation to the normal measurement operation without approvement of the serving base station.

10. An operation method of a base station in a communication system, the operation method comprising:
transmitting a first message to a terminal operating in a radio resource control (RRC) connected state, the first message including first configuration information for a normal measurement operation and second configuration information for a relaxed measurement operation;
receiving a second message from the terminal operating in the RRC connected state, the second message requesting switching from the normal measurement operation to the relaxed measurement operation; and
transmitting a third message to the terminal operating in the RRC connected state, the third message allowing the switching from the normal measurement operation to the relaxed measurement operation,
wherein the first configuration information is configured differently from the second configuration information, and power consumption of the terminal according to the relaxed measurement operation is lower than power consumption of the terminal according to the normal measurement operation.

11. The operation method according to claim 10, wherein each of the first configuration information and the second configuration information is configured for each operation state of the terminal, and the operation state includes the RRC connected state, an RRC inactive state, and an RRC idle state.

12. The operation method according to claim 10, wherein when a speed of the terminal satisfies a preconfigured criterion, switching from the normal measurement operation to the relaxed measurement operation is requested.

13. The operation method according to claim 10, wherein when a position of the terminal satisfies a preconfigured criterion, switching from the normal measurement operation to the relaxed measurement operation is requested.

14. The operation method according to claim 10, wherein when a change in the channel quality measured by the normal measurement operation satisfies a preconfigured criterion, switching from the normal measurement operation to the relaxed measurement operation is requested.

15. A terminal in a communication system, the terminal comprising:
a processor;
a memory electronically communicating the processor; and
at least one instruction stored in the memory,
wherein when executed by the processor, the at least one instruction causes the terminal to:
receive first configuration information for a normal measurement operation from a serving base station;
receive second configuration information for a relaxed measurement operation from the serving base station;
measure a channel quality for the serving base station by performing the normal measurement operation using the first configuration information; and
when a condition for the relaxed measurement operation is satisfied, measure a channel quality for the serving base station by performing the relaxed measurement operation using the second configuration information,
wherein the first configuration information is configured differently from the second configuration information, and power consumption of the terminal according to the relaxed measurement operation is lower than power consumption of the terminal according to the normal measurement operation.

16. The terminal according to claim 15, wherein when a speed of the terminal satisfies a preconfigured criterion, the relaxed measurement operation is performed instead of the normal measurement operation.

17. The terminal according to claim 15, wherein when a position of the terminal satisfies a preconfigured criterion, the relaxed measurement operation is performed instead of the normal measurement operation.

18. The terminal according to claim 15, wherein when a change in the channel quality measured by the normal measurement operation satisfies a preconfigured criterion, the relaxed measurement operation is performed instead of the normal measurement operation.

19. The terminal according to claim 15, wherein in the measuring of the channel quality by performing the relaxed measurement operation, the at least one instruction further causes the terminal to:
transmit a first message to the serving base station, the first message requesting switching from the normal measurement operation to the relaxed measurement operation;
receive a second message from the serving base station, the second message allowing the switching from the normal measurement operation to the relaxed measurement operation; and
when the switching from the normal measurement operation to the relaxed measurement operation is allowed, perform the relaxed measurement operation.

20. The terminal according to claim 15, wherein the at least one instruction further causes the terminal to, when a condition for the normal measurement operation is satisfied, switch the relaxed measurement operation to the normal measurement operation without approvement of the serving base station.
